# EUROPEAN PATENT APPLICATION

(11) **EP 0 916 698 A1**
(43) Date of publication of application: **19.05.1999**
(21) Application number: 97810869.4
(22) Date of filing: 14.11.1997
(51) Int. Cl.: C08K 13/02, C08L 23/02

(54) **Stabilized polyolefin**

(71) Applicant: Ciba Specialty Chemicals Holding Inc., 4057 Basel (CH)
(72) Inventor: Gugumus, François, 4123 Allschwil (CH)

(57) **Abstract**

A polyolefin containing
**(A)** a sterically hindered amine compound,
**(B)** CaO and/or Ca(OH)₂ and
**(C)** a phenolic antioxidant;
   with the proviso that the polyolefin is different from high-density polyethylene.

## Description

The present invention relates to a stabilized polyolefin and to a method for stabilizing a polyolefin against degradation induced by light, heat and oxidation.

The stabilization of polyolefins is described in numerous publications, for example in US-A-4,929,652, US-A-5,025,051, US-A-5,037,870, EP-A-276,923, EP-A-290,388, EP-A-429,731, EP-A-468,923, EP-A-690,094, DE-A-19,545,896 (Derwent 96-278,994/29; Chemical Abstracts 125:116779q), WO-A-95/25,767 and Chemical Abstracts 106:197407z.

The present invention relates in particular to
a polyolefin containing
**(A)** a sterically hindered amine compound,
**(B)** CaO and/or Ca(OH)₂ and
**(C)** a phenolic antioxidant;
   with the proviso that the polyolefin is different from high-density polyethylene, in particular polyethylene in general.

The polyolefin is preferably essentially free of calcium stearate and/or perchloric acid.

The sterically hindered amine is preferably a compound containing at least one group of the formula (I) or (II) 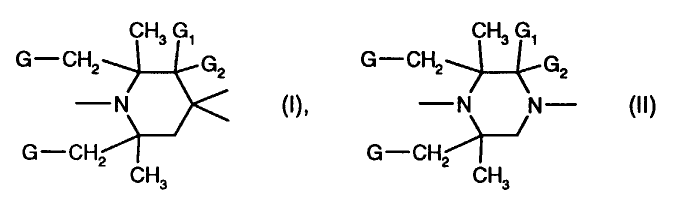
in which G is hydrogen or methyl, and
G₁ and G₂, independently of one another, are hydrogen, methyl or together are a substituent =O.

More detailed examples of sterically hindered amines are described below under classes (a') to (i').

### (a') A compound of the formula (Ia)

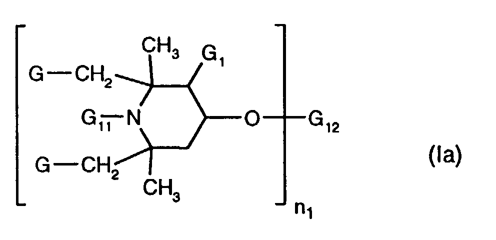

in which n₁ is a number from 1 to 4, G and G₁, independently of one another, are hydrogen or methyl,
G₁₁ is hydrogen, O^{·}, hydroxyl, C₁-C₁₈alkyl, C₃-C₈alkenyl, C₃-C₈alkynyl, C₇-C₁₂aralkyl, C₁-C₁₈alkoxy, C₅-C₈cycloalkoxy, C₇-C₉phenylalkoxy, C₁-C₈alkanoyl, C₃-C₅alkenoyl, C₁-C₁₈alkanoyloxy, glycidyl or a group of the formula -CH₂CH(OH)-Z, in which Z is hydrogen, methyl or phenyl, G₁₁ preferably being H, C₁-C₄alkyl, allyl, benzyl, acetyl or acryloyl, and
G₁₂, if n₁ is 1, is hydrogen, C₁-C₁₈alkyl which is uninterrupted or interrupted by one or more oxygen atoms, cyanoethyl, benzoyl, glycidyl, a monovalent radical or an aliphatic, cycloaliphatic, araliphatic, unsaturated or aromatic carborylic acid, carbamic acid or phosphotus-containing acid or a monovalent silyl radical, preferably a radical of an aliphatic carboxylic acid having 2 to 18 carbon atoms, of a cycloaliphatic carboxylic acid having 7 to 15 carbon atoms, or an α,β-unsaturated carboxylic acid having 3 to 5 carbon atoms or of an aromatic carboxylic acid having 7 to 15 carbon atoms, where each carboxylic acid can be substituted in the aliphatic, cycloaliphatic or aromatic moiety by 1 to 3 -COOZ₁₂ groups, in which Z₁₂ is H, C₁-C₂₀alkyl, C₃-C₁₂alkenyl, C₅-C₇cycloalkyl, phenyl or benzyl,
G₁₂, if n₁ is 2, is C₂-C₁₂alkylene, C₄-C₁₂alkenylene, xylylene, a divalent radical of an aliphatic, cycloaliphatic, araliphatic or aromatic dicarboxylic acid, dicarbamic acid or phosphorus-containing acid or a divalent silyl radical, preferably a radical of an aliphatic dicarboxylic acid having 2 to 36 carbon atoms, or a cycloaliphatic or aromatic dicarboxylic acid having 8-14 carbon atoms or of an aliphatic, cycloaliphatic or aromatic dicarbamic acid having 8-14 carbon atoms, where each dicarboxylic acid may be substituted in the aliphatic, cycloaliphatic or aromatic moiety by one or two -COOZ₁₂ groups,
G₁₂, if n₁ is 3, is a trivalent radical of an aliphatic, cycloaliphatic or aromatic tricarboxylic acid, which may be substituted in the aliphatic, cycloaliphatic or aromatic moiety by -COOZ₁₂, of an aromatic tricarbamic acid or of a phosphorus-containing acid, or is a trivalent silyl radical,
and G₁₂, if n₁ is 4, is a tetravalent radical of an aliphatic, cycloaliphatic or aromatic tetracarboxylic acid.

The carboxylic acid radicals mentioned above are in each case taken to mean radicals of the formula (-CO)ₓR, where x is as defined above, and the meaning of R arises from the definition given.

Alkyl with up to 20 carbon atoms is, for example, methyl, ethyl, n-propyl, n-butyl, sec-butyl, tert-butyl, n-hexyl, n-octyl, 2-ethylhexyl, n-nonyl, n-decyl, n-undecyl, n-dodecyl, n-tridecyl, n-tetradecyl, n-hexadecyl or n-octadecyl.

C₃-C₈alkenyl G₁₁ can be, for example, 1-propenyl, allyl, methallyl, 2-butenyl, 2-pentenyl, 2-hexenyl, 2-octenyl, or 4-tert-butyl-2-butenyl.

C₃-C₈alkynyl G₁₁ is preferably propargyl.

C₇-C₁₂aralkyl G₁₁ is, in particular, phenethyl, especially benzyl.

C₁-C₁₈alkoxy G₁₁ is, for example, methoxy, ethoxy, propoxy, isopropoxy, butoxy, isobutoxy, pentoxy, isopentoxy, hexoxy, heptoxy, octoxy, decyloxy, dodecyloxy, tetradecyloxy, hexadecyloxy and octadecyloxy. C₆-C₁₂alkoxy, in particular heptoxy and octoxy, is preferred.

C₅-C₈cycloalkoxy G₁₁ is, for example, cyclopentoxy, cyclohexoxy, cycloheptoxy, cyclooctoxy, cyclodecyloxy and cyclododecyloxy. C₅-C₈cycloalkoxy, in particular cyclopentoxy and cyclohexoxy, is preferred.

C₇-C₉phenylalkoxy is, for example, benzyloxy.

C₁-C₈alkanoyl G₁₁ is, for example, formyl, propionyl, butyryl, octanoyl, but preferably acetyl and C₃-C₅alkenoyl G₁₁ is in particular acryloyl.

C₁-C₁₈alkanoyloxy G₁₁ is, for example, formyloxy, acetyloxy, propionyloxy, butyryloxy, valeryloxy, lauroyloxy, palmitoyloxy and stearoyloxy.

Examples of several G₁₂ radicals are given below.

If G₁₂ is a monovalent radical of a carboxylic acid, it is, for example, an acetyl, caproyl, stearoyl, acryloyl, methacryloyl, benzoyl or β-(3,5-di-tert-butyl-4-hydroxyphenyl)propionyl radical.

If G₁₂ is a monovalent silyl radical, it is, for example, a radical of the formula -(CⱼH₂ⱼ)Si(Z')₂Z'', in which j is an integer in the range from 2 to 5, and Z' and Z'', independently of one another, are C₁-C₄alkyl or C₁-C₄alkoxy.

If G₁₂ is a divalent radical of a dicarboxylic add, it is, for example, a malonyl, succinyl, glutaryl, adipoyl, suberoyl, sebacoyl, maleoyl, itaconyl, phthaloyl, dibutylmalonyl, dibenzylmalonyl, butyl(3,5-di-tert-butyl-4-hydroxybenzyl)malonyl or bicycloheptenedicarbonyl radical or a group of the formula

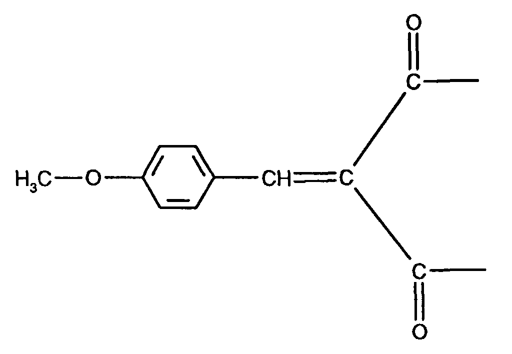

If G₁₂ is a trivalent radical of a tricarboxylic acid, it is, for example, a trimellitoyl, citryl or nitrilotriacetyl radical.

If G₁₂ is a tetravalent radical of a tetracarboxylic acid, it is, for example, the tetravalent radical of butane-1,2,3,4-tetracarboxylic acid or of pyromellitic acid.

If G₁₂ is a divalent radical of a dicarbamic acid, it is, for example, hexamethylenedicarbamoyl or 2,4-toluylenedicarbamoyl radical.

Preference is given to compounds of the formula (Ia) in which G and G₁ are hydrogen, G₁₁ is hydrogen or methyl, n₁ is 2 and G₁₂ is the diacyl radical of an aliphatic dicarboxylic acid having 4-12 carbon atoms.

Examples of polyalkylpiperidine compounds from this class are the following compounds:
1) 4-hydroxy-2,2,6,6-tetramethylpiperidine
2) 1-allyl-4-hydroxy-2,2,6,6-tetramethylpiperidine
3) 1-benzyl-4-hydroxy-2,2,6,6-tetramethylpiperidine
4) 1-(4-tert-butyl-2-butenyl)-4-hydroxy-2,2,6,6-tetramethylpiperidine
5) 4-stearoyloxy-2,2,6,6-tetramethylpiperidine
6) 1-ethyl-4-salicyloyloxy-2,2,6,6-tetramethylpiperidine
7) 4-methacryloyloxy-1,2,2,6,6-pentamethylpiperidine
8) 1,2,2,6,6-pentamethylpiperidin-4-yl β-(3,5-di-tert-butyl-4-hydroxyphenyl)propionate
9) di(1-benzyl-2,2,6,6-tetramethylpiperidin-4-yl) maleate
10) di(2,2,6,6-tetramethylpiperidin-4-yl) succinate
11) di(2,2,6,6-tetramethylpiperidin-4-yl) glutarate
12) di(2,2,6,6-tetramethylpiperidin-4-yl) adipate
13) di(2,2,6,6-tetramethylpiperidin-4-yl) sebacate
14) di(1,2,2,6,6-pentamethylpiperidin-4-yl) sebacate
15) di(1,2,3,6-tetramethyl-2,6-diethyl-piperidin-4-yl) sebacate
16) di(1-allyl-2,2,6,6-tetramethylpiperidin-4-yl) phthalate
17) 1-hydroxy-4-β-cyanoethoxy-2,2,6,6-tetramethylpiperidine
18) 1-acetyl-2,2,6,6-tetramethylpiperidin-4-yl acetate
19) tri(2,2,6,6-tetramethylpiperidin-4-yl) trimellitate
20) 1-acryloyl-4-benzyloxy-2,2,6,6-tetramethylpiperidine
21) di(2,2,6,6-tetramethylpiperidin-4-yl) diethylmalonate
22) di(1,2,2,6,6-pentamethylpiperidin-4-yl) dibutylmalonate
23) di(1,2,2,6,6-pentamethylpiperidin-4-yl) butyl(3,5-di-tert-butyl-4-hydroxybenzyl)malonate
24) di(1-octyloxy-2,2,6,6-tetramethylpiperidin-4-yl) sebacate
25) di(1-cyclohexyloxy-2,2,6,6-tetramethylpiperidin-4-yl) sebacate
26) hexane-1',6'-bis(4-carbamoyloxy-1-n-butyl-2,2,6,6-tetramethylpiperidine)
27) toluene-2',4'-bis-(4-carbamoyloxy-1-n-propyl-2,2,6,6-tetramethylpiperidine)
28) dimethylbis(2,2,6,6-tetramethylpiperidin-4-oxy)silane
29) phenyltris(2,2,6,6-tetramethylpiperidin-4-oxy)silane
30) tris(1-propyl-2,2,6,6-tetramethylpiperidin-4-yl) phosphite
30-a) tris(1-methyl-2,2,6,6-tetramethylpiperidin-4-yl) phosphite
31) tris(1-propyl-2,2,6,6-tetramethylpiperidin-4-yl) phosphate
32) phenyl bis(1,2,2,6,6-pentamethylpiperidin-4-yl) phosphonate
33) 4-hydroxy-1,2,2,6,6-pentamethylpiperidine
34) 4-hydroxy-N-hydroxyethyl-2,2,6,6-tetramethylpiperidine
35) 4-hydroxy-N-(2-hydroxypropyl)-2,2,6,6-tetramethylpiperidine
36) 1-glycidyl-4-hydroxy-2,2,6,6-tetramethylpiperidine
36-a) 1,2,3,4-tetrakis[2,2,6,6-tetramethylpiperidin-4-yloxycarbonyl]butane
36-b) 1,2,3,4-tetrakis[1,2,2,6,6-pentamethylpiperidin-4-yloxycarbonyl]butane
36-c) 2,2,6,6-tetramethylpiperidin-4-yloxycarbonyl(C₁₅-C₁₇alkane)
36-d) 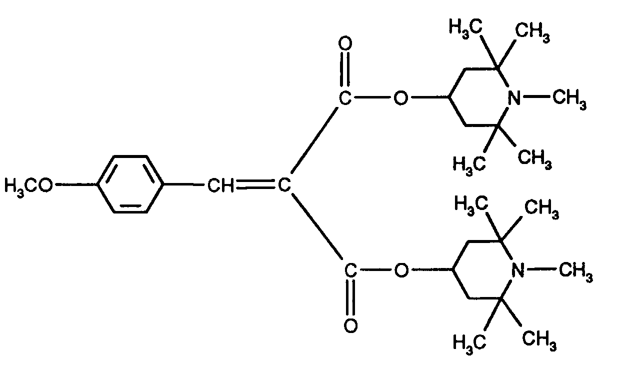
36-e)

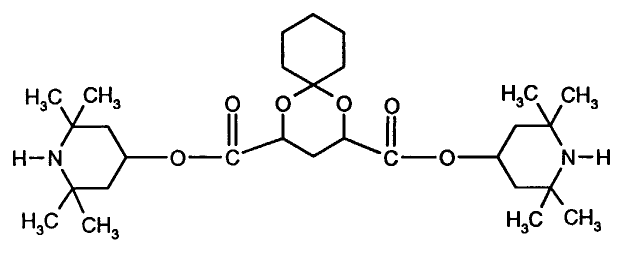

### (b') A compound of the formula (Ib)

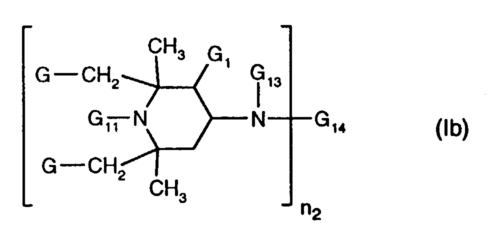

in which n₂ is the number 1, 2 or 3, G, G₁ and G₁₁ are as defined under (a'),
G₁₃ is hydrogen, C₁-C₁₂alkyl, C₂-C₅hydroxyalkyl, C₅-C₇cycloalkyl, C₇-C₈aralkyl, C₁-C₁₈alkanoyl, C₃-C₅alkenoyl, benzoyl or a group of the formula 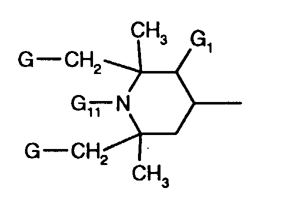
and G₁₄, if n₂ is 1, is hydrogen, C₁-C₁₈alkyl, C₃-C₈alkenyl, C₅-C₇cycloalkyl, C₁-C₄alkyl which is substituted by a hydroxyl, cyano, alkoxycarbonyl or carbamide group, glycidyl, a group of the formula -CH₂-CH(OH)-Z or of the formula -CONH-Z, in which Z is hydrogen, methyl or phenyl;
G₁₄, if n₂ is 2, is C₂-C₁₂alkylene, C₆-C₁₂arylene, xylylene, a -CH₂-CH(OH)-CH₂ group or a -CH₂-CH(OH)-CH₂-O-D-O- group, in which D is C₂-C₁₀alkylene, C₆-C₁₅arylene, C₆-C₁₂cycloalkylene, or, provided that G₁₃ is not alkanoyl, alkenoyl or benzoyl, G₁₄ can alternatively be 1-oxo-C₂-C₁₂alkylene, a divalent radical of an aliphatic, cycloaliphatic or aromatic dicarboxylic acid or dicarbamic acid or alternatively the group -CO-,
G₁₄, if n₂ is 3, is a group 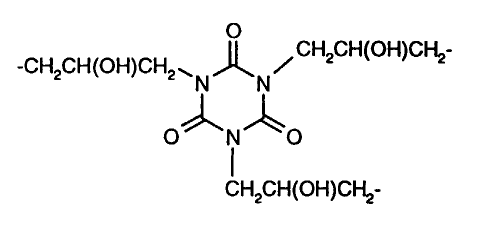 or, if n₂ is 1, G₁₃ and G₁₄ together can be the divalent radical of an aliphatic, cycloaliphatic or aromatic 1,2- or 1,3-dicarboxylic acid.

Some examples for the radicals G₁₃, G₁₄ and D are given below.

Any alkyl substituents are as defined above for (a').

Any C₅-C₇-cycloalkyl substituents are, in particular, cyclohexyl.

C₇-C₈aralkyl G₁₃ is, in particular, phenylethyl or especially benzyl.

C₂-C₅hydroxyalkyl G₁₃ is, in particular, 2-hydroxyethyl or 2-hydroxypropyl.

C₁-C₁₈alkanoyl G₁₃ is, for example, formyl, acetyl, propionyl, butyryl, octanoyl, dodecanoyl, hexadecanoyl, octadecanoyl, but preferably acetyl, and C₃-C₅alkenoyl G₁₃ is, in particular, acryloyl.

C₂-C₈alkenyl G₁₄ is, for example, allyl, methallyl, 2-butenyl, 2-pentenyl, 2-hexenyl or 2-octenyl.

G₁₄ as a hydroxyl-, cyano-, alkoxycarbonyl- or carbamide-substituted C₁-C₄alkyl can be, for example, 2-hydroxyethyl, 2-hydroxypropyl, 2-cyanoethyl, methoxycarbonylmethyl, 2-ethoxycarbonylethyl, 2-aminocarbonylpropyl or 2-(dimethylaminocarbonyl)ethyl.

Any C₂-C₁₂alkylene radicals are, for example, ethylene, propylene, 2,2-dimethylpropylene, tetramethylene, hexamethylene, octamethylene, decamethylene or dodecamethylene.

Any C₆-C₁₅arylene substituents are, for example, o-, m- or p-phenylene, 1,4-naphthylene or 4,4'-diphenylene.

C₆-C₁₂cycloalkylene is, in particular, cyclohexylene.

G₁₄ as 1-oxo-C₂-C₁₂alkylene is preferably a group

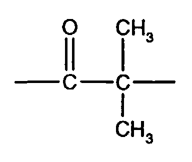

Preference is given to compounds of the formula (Ib) in which n₂ is 1 or 2, G and G₁ are hydrogen, G₁₁ is hydrogen or methyl, G₁₃ is hydrogen, C₁-C₁₂alkyl or a group of the formula 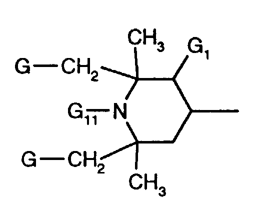 and G₁₄, in the case where n=1,is hydrogen or C₁-C₁₂alkyl, and, in the case where n=2, is C₂-C₈alkylene or 1-oxo-C₂-C₈alkylene.

Examples of polyalkylpiperidine compounds from this class are the following compounds:
37) N,N'-bis(2,2,6,6-tetramethylpiperidin-4-yl)hexamethylene-1,6-diamine
38) N,N'-bis(2,2,6,6-tetramethylpiperidin-4-yl)hexamethylene-1,6-diacetamide
39) bis(2,2,6,6-tetramethylpiperidin-4-yl)amine
40) 4-benzoylamino-2,2,6,6-tetramethylpiperidine
41) N,N'-bis(2,2,6,6-tetramethylpiperidin-4-yl)-N,N'-dibutyladipamide
42) N,N'-bis(2,2,6,6-tetramethylpiperidin-4-yl)-N,N'-dicyclohexyl-2-hydroxypropylene-1,3-diamine
43) N,N'-bis(2,2,6,6-tetramethylpiperidin-4-yl)-p-xylylenediamine
44) N,N'-bis(2,2,6,6-tetramethylpiperidin-4-yl)succinamide
45) bis(2,2,6,6-tetramethylpiperidin-4-yl) N-(2,2,6,6-tetramethylpiperidin-4-yl)-β-aminodipropionate
46) The compound of the formula 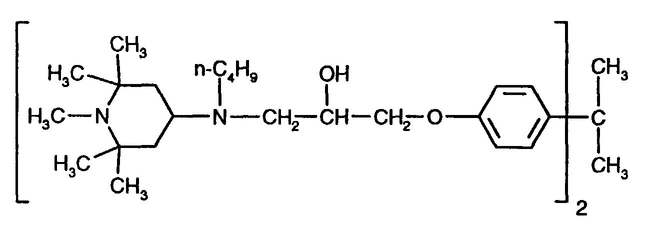
47) 4-(bis-2-hydroxyethylamino)-1,2,2,6,6-pentamethylpiperidine
48) 4-(3-methyl-4-hydroxy-5-tert-butyl-benzamido)-2,2,6,6-tetramethylpiperidine
49) 4-methacrylamido-1,2,2,6,6-pentamethylpiperidine
49-a) 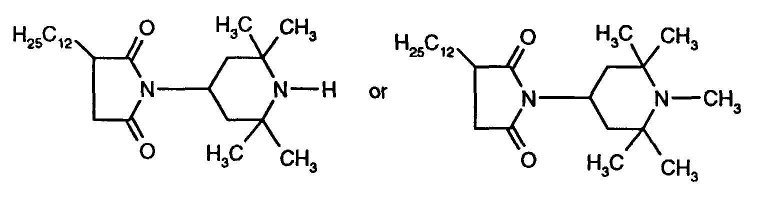
49-b) N,N',N''-tris[2,2,6,6-tetramethylpiperidin-4-ylamino(2-hydroxypropylene)]isocyanurate
49-c) 2-(2,2,6,6-tetramethylpiperidin-4-ylamino)-2-(2,2,6,6-tetramethylpiperidin-4-ylaminocarbonyl)propane
49-d) 1,6-bis[N-(2,2,6,6-tetramethylpiperidin-4-yl)formylamino]hexane

### (c') A compound of the formula (Ic)

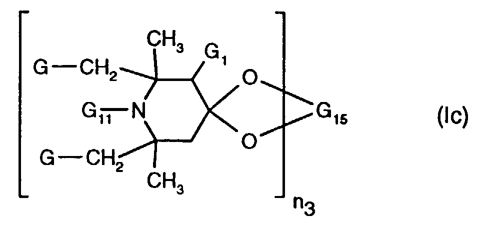

in which n₃ is the number 1 or 2, G, G₁ and G₁₁ are as defined under (a'), and G₁₅, if n₃ is 1, is C₂-C₈alkylene, C₂-C₈hydroxyalkylene or C₄-C₂₂acyloxyalkylene, and if n₃ is 2, G₁₅ is the (-CH₂)₂C(CH₂-)₂ group.

C₂-C₈alkylene or C₂-C₈hydroxyalkylene G₁₅ is, for example, ethylene, 1-methylethylene, propylene, 2-ethylpropylene or 2-ethyl-2-hydroxymethylpropylene.

C₄-C₂₂acyloxyalkylene G₁₅ is, for example, 2-ethyl-2-acetoxymethylpropylene.

Examples of polyalkylpiperidine compounds from this class are the following compounds:
50) 9-aza-8,8,10,10-tetramethyl-1,5-dioxaspiro[5.5]undecane
51) 9-aza-8,8,10,10-tetramethyl-3-ethyl-1,5-dioxaspiro[5.5]undecane
52) 8-aza-2,7,7,8,9,9-hexamethyl-1,4-dioxaspiro[4.5]decane
53) 9-aza-3-hydroxymethyl-3-ethyl-8,8,9,10,10-pentamethyl-1,5-dioxaspiro[5.5]undecane
54) 9-aza-3-ethyl-3-acetoxymethyl-9-acetyl-8,8,10,10-tetramethyl-1,5-dioxaspiro[5.5]-undecane
55) 2,2,6,6-tetramethylpiperidine-4-spiro-2'-(1',3'-dioxane)-5'-spiro-5''-(1'',3''-dioxane)-2''-spiro-4'''-(2''',2''',6''',6'''-tetramethylpiperidine)

### (d') A compound of the formula (Id-1), (Id-2) or (Id-3),

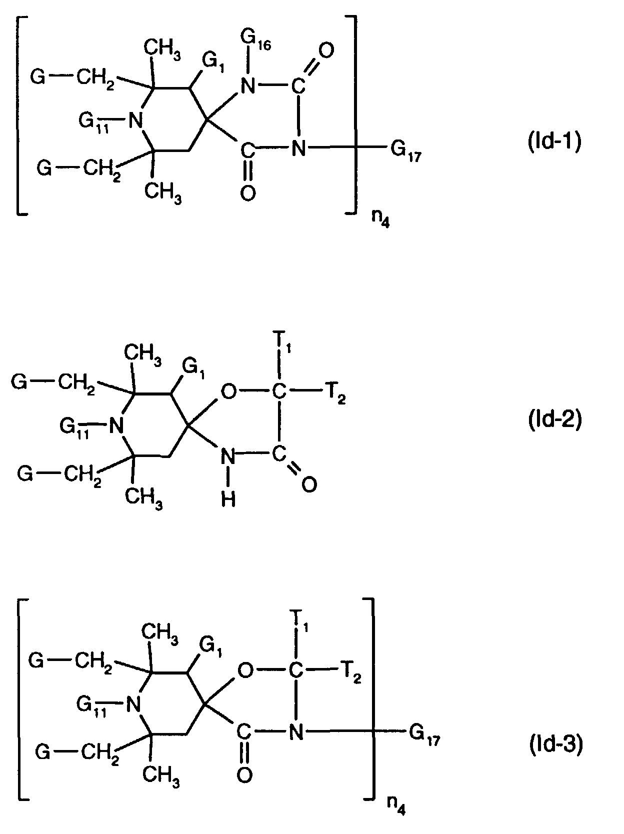

in which n₄ is the number 1 or 2, G, G₁ and G₁₁ are as defined under (a'),
G₁₆ is hydrogen, C₁-C₁₂alkyl, allyl, benzyl, glycidyl or C₂-C₆alkoxyalkyl, and
G₁₇, if n₄ is 1, is hydrogen, C₁-C₁₂alkyl, C₃-C₅alkenyl, C₇-C₉aralkyl, C₅-C₇cycloalkyl, C₂-C₄hydroxyalkyl, C₂-C₆alkoxyalkyl, C₆-C₁₀aryl, glycidyl or a group of the formula -(CH₂)ₚ-COO-Q or -(CH₂)ₚ-O-CO-Q, in which p is 1 or 2, and Q is C₁-C₄alkyl or phenyl, and G₁₇, if n is 2, is C₂-C₁₂alkylene, C₄-C₁₂alkenylene, C₆-C₁₂arylene, a group of the formula -CH₂-CH(OH)-CH₂-O-D'-O-CH₂-CH(OH)-CH₂-, in which D' is C₂-C₁₀alkylene, C₆-C₁₅arylene, C₆-C₁₂cycloalkylene or a group of the formula -CH₂CH(OD'')CH₂-(OCH₂-CH(OD'')CH₂)₂-, in which D'' is hydrogen, C₁-C₁₈alkyl, allyl, benzyl, C₂-C₁₂alkanoyl or benzoyl,
T₁ and T₂, independently of one another, are hydrogen, C₁-C₁₈alkyl or unsubstituted or halogen- or C₁-C₄alkyl-substituted C₆-C₁₀aryl or C₇-C₉aralkyl, or
T₁ and T₂ together with the carbon atom bonding them form a C₅-C₁₄cycloalkane ring.

A compound of the formula (Id-3) is preferred.

Some examples of the several variables in the formulae (Id-1), (Id-2) and (Id-3) are given below.

Any C₁-C₁₂alkyl substituents are, for example, methyl, ethyl, n-propyl, n-butyl, sec-butyl, tert-butyl, n-hexyl, n-octyl, 2-ethylhexyl, n-nonyl, n-decyl, n-undecyl or n-dodecyl.

Any C₁-C₁₈alkyl substituents can be, for example, the abovementioned groups and in addition, for example, n-tridecyl, n-tetradecyl, n-hexadecyl or n-octadecyl.

Any C₂-C₆alkoxyalkyl substituents are, for example, methoxymethyl, ethoxymethyl, propoxymethyl, tert-butoxymethyl, ethoxyethyl, ethoxypropyl, n-butoxyethyl, tert-butoxyethyl, isopropoxyethyl or propoxypropyl.

C₃-C₅alkenyl G₁₇ is, for example, 1-propenyl, allyl, methallyl, 2-butenyl or 2-pentenyl.

C₇-C₉aralkyl G₁₇, T₁ and T₂ are, in particular, phenethyl or especially benzyl. If T₁ and T₂ together with the carbon atom form a cycloalkane ring, this can be, for example, a cyclopentane, cyclohexane, cyclooctane or cyclododecane ring.

C₂-C₄hydroxyalkyl G₁₇ is, for example, 2-hydroxyethyl, 2-hydroxypropyl, 2-hydroxybutyl or 4-hydroxybutyl.

C₆-C₁₀aryl G₁₇, T₁ and T₂ are, in particular, phenyl or α- or β-naphthyl, which are unsubstituted or substituted by halogen or C₁-C₄alkyl.

C₂-C₁₂alkylene G₁₇ is, for example, ethylene, propylene, 2,2-dimethylpropylene, tetramethylene, hexamethylene, octamethylene, decamethylene or dodecamethylene.

C₄-C₁₂alkenylene G₁₇ is, in particular, 2-butenylene, 2-pentenylene or 3-hexenylene.

C₆-C₁₂arylene G₁₇ is, for example, o-, m- or p-phenylene, 1,4-naphthylene or 4,4'-diphenylene.

C₂-C₁₂alkanoyl D'' is, for example, propionyl, butyryl, octanoyl, dodecanoyl, but preferably acetyl.

C₂-C₁₀alkylene, C₆-C₁₅arylene or C₆-C₁₂cycloalkylene D' have, for example, one of the definitions given for D under (b').

Examples of polyalkylpiperidine compounds from this class are the following compounds:
56) 3-benzyl-1,3,8-triaza-7,7,9,9-tetramethylspiro[4.5]decane-2,4-dione
57) 3-n-octyl-1,3,8-triaza-7,7,9,9-tetramethylspiro[4.5]decane-2,4-dione
58) 3-allyl-1,3,8-triaza-1,7,7,9,9-pentamethylspiro[4.5]decane-2,4-dione
59) 3-glycidyl-1,3,8-triaza-7,7,8,9,9-pentamethylspiro[4.5]decane-2,4-dione
60) 1,3,7,7,8,9,9-heptamethyl-1,3,8-triazaspiro[4.5]decane-2,4-dione
61) 2-isopropyl-7,7,9,9-tetramethyl-1-oxa-3,8-diaza-4-oxospiro[4.5]decane
62) 2,2-dibutyl-7,7,9,9-tetramethyl-1-oxa-3,8-diaza-4-oxospiro[4.5]decane
63) 2,2,4,4-tetramethyl-7-oxa-3,20-diaza-21-oxodispiro[5.1.11.2]heneicosane
64) 2-butyl-7,7,9,9-tetramethyl-1-oxa-4,8-diaza-3-oxospiro[4.5]decane and preferably:
65) 8-acetyl-3-dodecyl-1,3,8-triaza-7,7,9,9-tetramethylspiro[4.5]decane-2,4-dione and the compounds of the following formulae:
66) 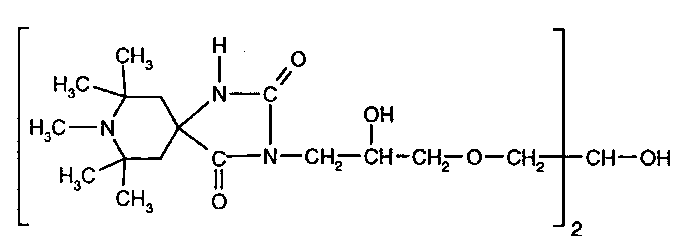
67) 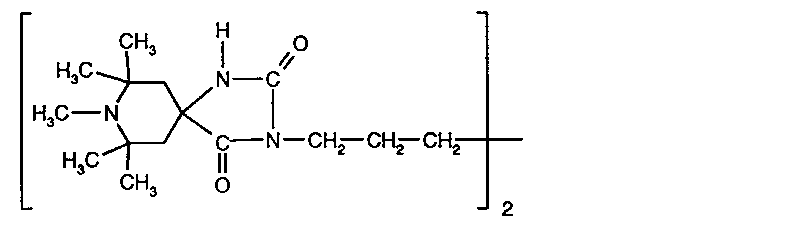
68) 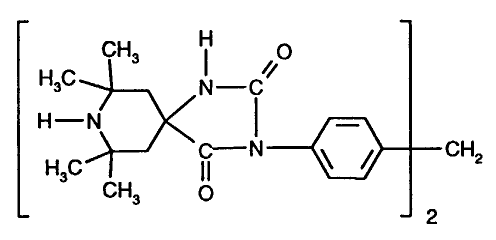
69-a) 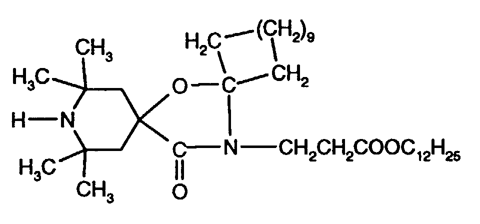
69-b) Mixture of 60% by weight of
and 40% by weight of

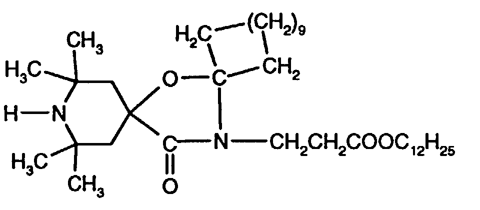

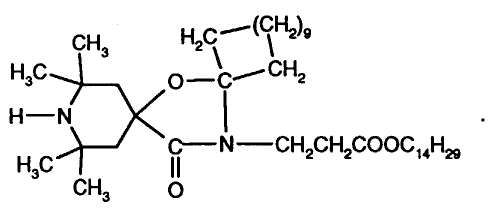

### (e') A compound of the formula (Ie)

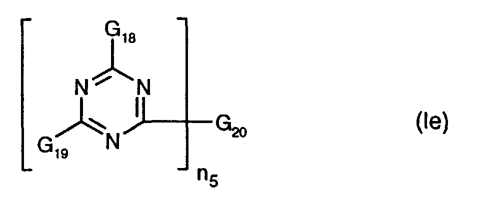

in which n₅ is the number 1 or 2, and G₁₈ is a group of the formula 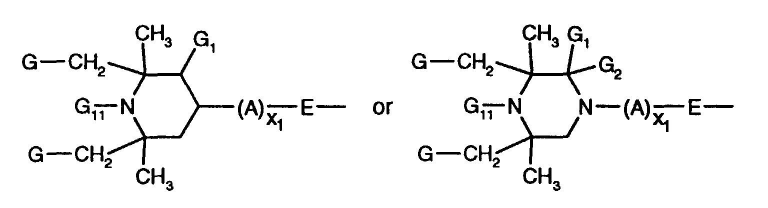
in which G and G₁₁ are as defined under (a'), and G₁ and G₂ are hydrogen, methyl or, together, are a substituent =O,
E is -O- or -ND'''-,
A is C₂-C₆alkylene or -(CH₂)₃-O- and
x₁ is the number 0 or 1,
D''' is hydrogen, C₁-C₁₂alkyl, C₂-C₅hydroxyalkyl or C₅-C₇cycloalkyl,
G₁₉ is identical to G₁₈ or is one of the groups -N(G₂₁)(G₂₂), -OG₂₃, -N(H)(CH₂OG₂₃) or -N(CH₂OG₂₃)₂,
G₂₀, if n = 1, is identical to G₁₈ or G₁₉ and, if n = 2, is an -E-D^{IV}-E- group, in which D^{IV} is C₂-C₈alkylene or C₂-C₈alkylene which is interrupted by 1 or 2 -NG₂₁- groups,
G₂₁ is C₁-C₁₂alkyl, cyclohexyl, benzyl or C₁-C₄-hydroxyalkyl or a group of the formula 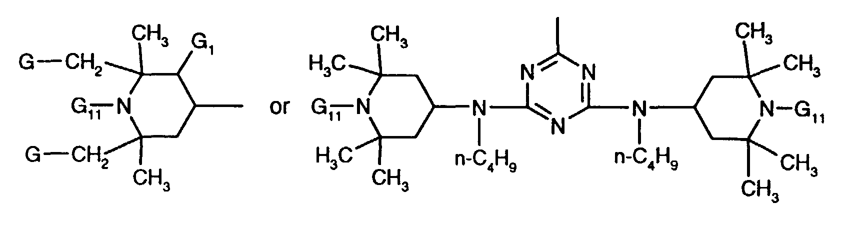
G₂₂ is C₁-C₁₂alkyl, cyclohexyl, benzyl or C₁-C₄hydroxyalkyl, and
G₂₃ is hydrogen, C₁-C₁₂alkyl or phenyl, or G₂₁ and G₂₂ together are C₄-C₅alkylene or C₄-C₅oxaalkylene, for example -CH₂CH₂-O-CH₂CH₂- , or a group of the formula -CH₂CH₂-N(G₁₁)-CH₂CH₂-.

Some examples of the several variables in the formula (Ie) are given below.

Any C₁-C₁₂alkyl substituents are, for example, methyl, ethyl, n-propyl, n-butyl, sec-butyl, tert-butyl, n-hexyl, n-octyl, 2-ethylhexyl, n-nonyl, n-decyl, n-undecyl or n-dodecyl.

Any hydroxyalkyl substituents are, for example, 2-hydroxyethyl, 2-hydroxypropyl, 3-hydroxypropyl, 2-hydroxybutyl or 4-hydroxybutyl.

Any C₅-C₇cycloalkyl substituents are, for example, cyclopentyl, cyclohexyl or cycloheptyl. Cyclohexyl is preferred.

C₂-C₆alkylene A is, for example, ethylene, propylene, 2,2-dimethylpropylene, tetramethylene or hexamethylene.

If G₂₁ and G₂₂ together are C₄-C₅alkylene or oxaalkylene, they are, for example, tetramethylene, pentamethylene or 3-oxapentamethylene.

Examples of polyalkylpiperidine compounds from this class are the compounds of the following formulae:
70) 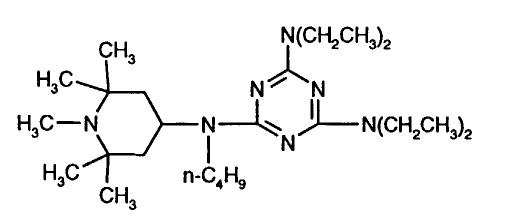
71) 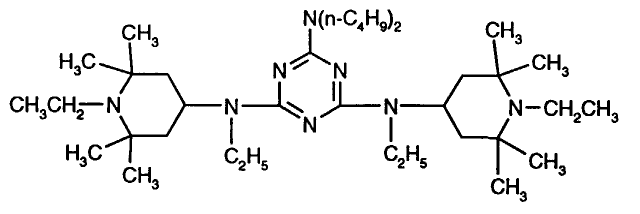
72) 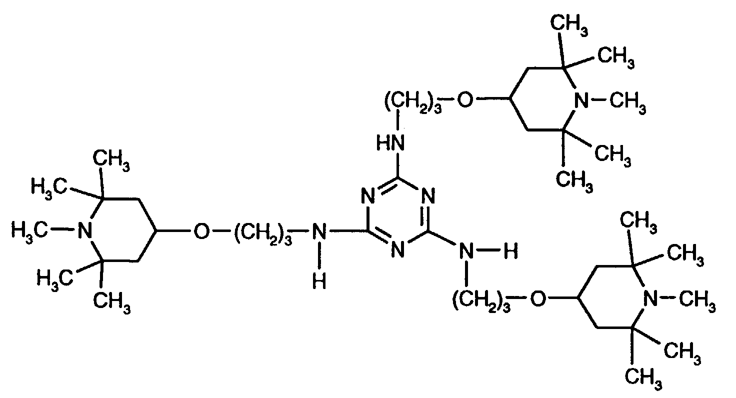
73) 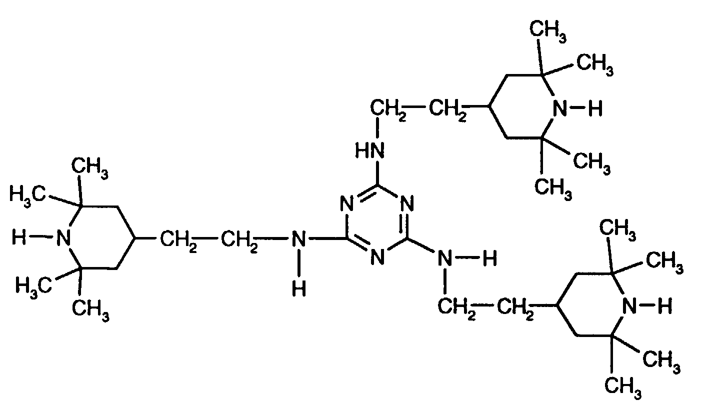
74) 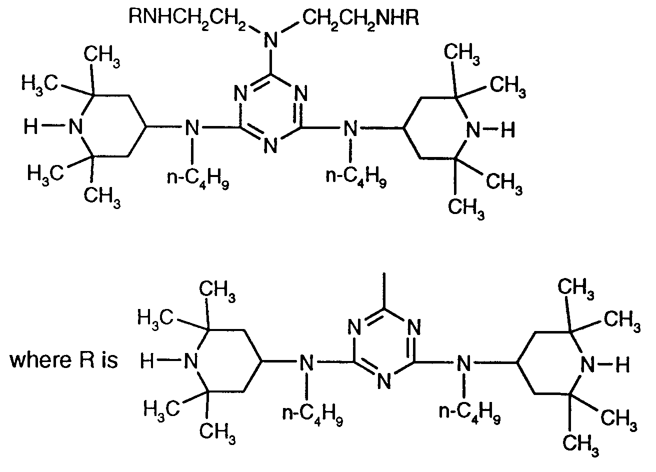
75) 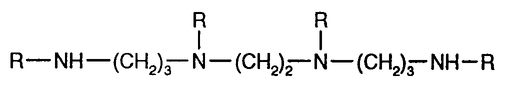 where R has the same meaning as in compound 74.
76) 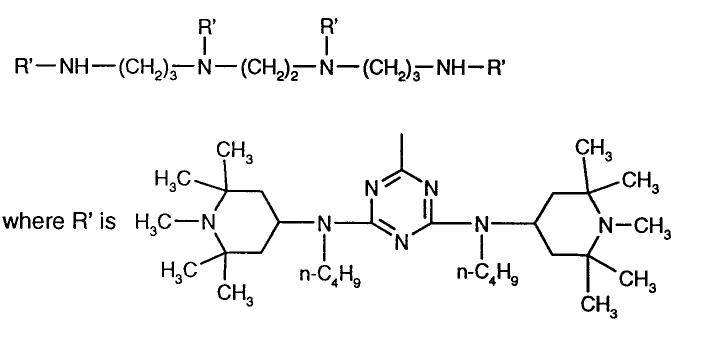
77) 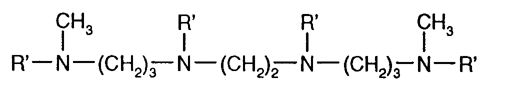 where R' has the same meaning as in compound 76.
78) 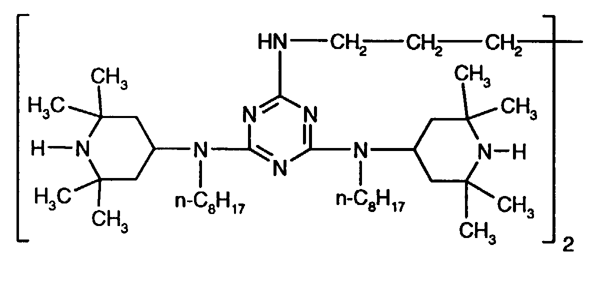
79) 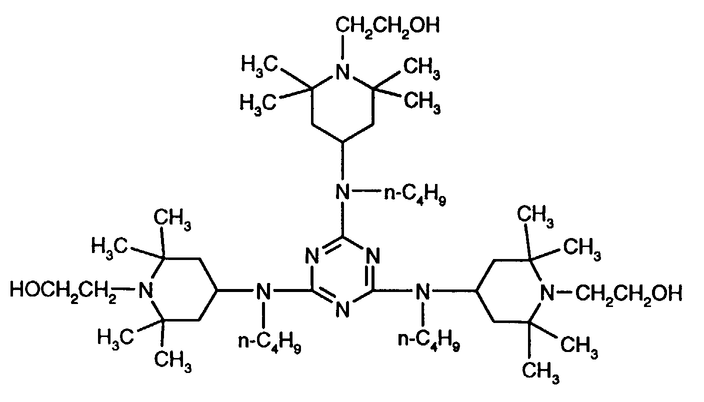
80)

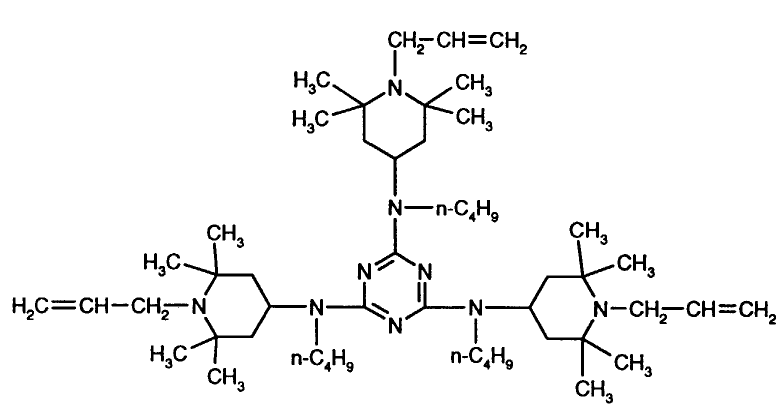

### (f') A compound of the formula (If)

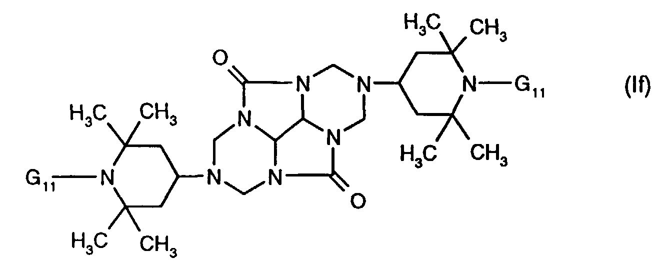

wherein G₁₁ is as defined under (a').

A preferred example from this class is the following compound:
80-a)

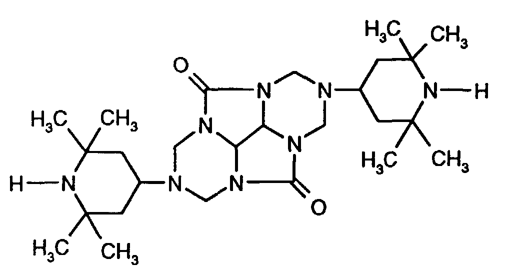

### (g') Oligomeric or polymeric compounds whose recurring structural unit contains a 2,2,6,6-tetraalkylpiperidinyl radical, in particular polyesters, polyethers, polyamides, polyamines, polyurethanes, polyureas, polyaminotriazines, poly(meth)acrylates, poly(meth)acrylamides and copolymers thereof which contain such radicals.

Examples of 2,2,6,6-polyalkylpiperidine compounds from this class are the compounds of the following formulae, where m₁ to m₁₄ is a number from 2 to about 200, preferably 2 to 100, for example 2 to 50, 2 to 40 or 3 to 40 or 4 to 10.

The meanings of the end groups which saturate the free valences in the oligomeric or polymeric compounds listed below depend on the processes used for the preparation of said compounds. The end groups can also in addition be modified after the synthesis of the compounds.
81) 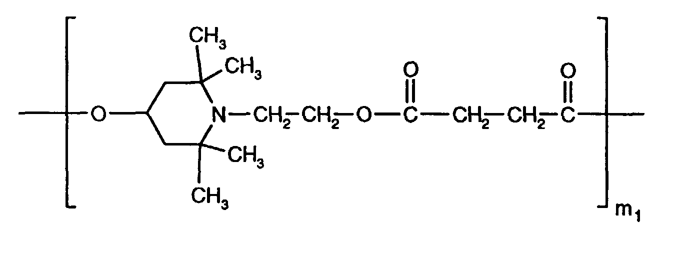
82) 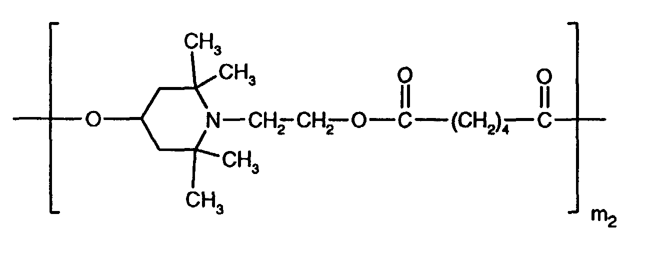
   In the compounds 81 and 82, the end group bonded to the -O- can be, for example, hydrogen or a group -CO-(CH₂)₂-COO-Y or -CO-(CH₂)₄-COO-Y, respectively, with Y being hydrogen or C₁-C₄alkyl and the end group bonded to the diacyl can be, for example, -O-Y or a group 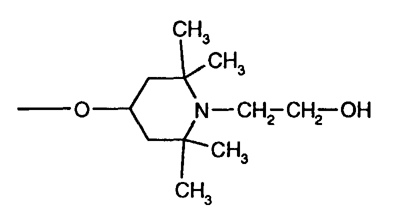
83) 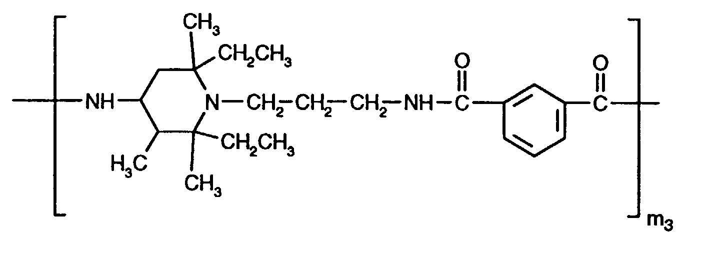
   In the compound 83, the end group bonded to the amino residue can be, for example, a group 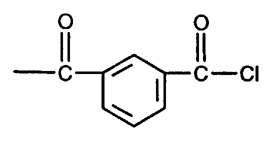 and the end group bonded to the diacyl residue can be, for example, Cl.
84-1) 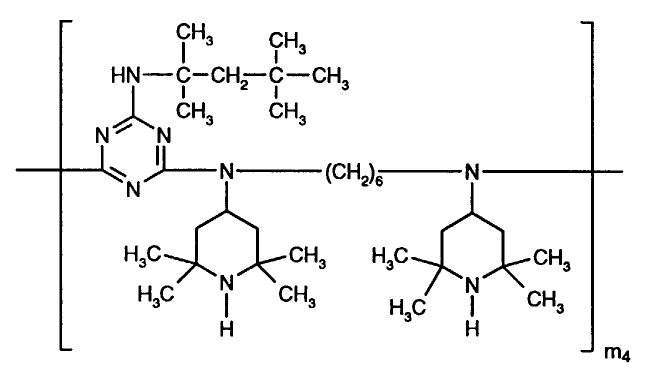
84-2) 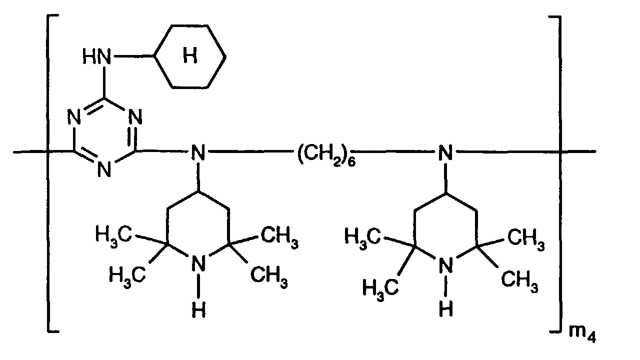
   In the compounds 84-1 and 84-2, the end group bonded to the triazine residue can be, for example, chlorine or a group 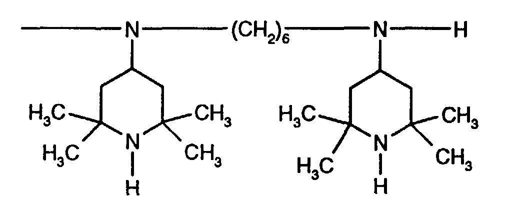 and the end group bonded to the diamino group can be, for example, hydrogen or a group 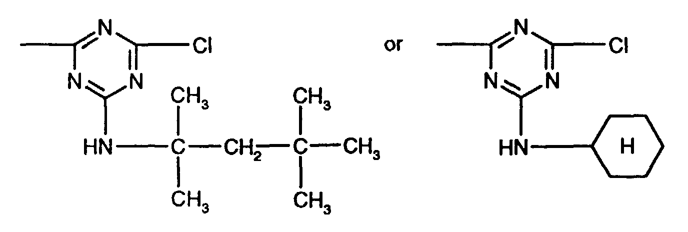
   It may be convenient to replace the chlorine attached to the triazine by e.g. -OH or an amino group. Suitable amino groups are typically: pyrrolidin-1-yl, morpholino, -NH₂, -N(C₁-C₈alkyl)₂ and -NY'(C₁-C₈alkyl) wherein Y' is hydrogen or a group of the formula 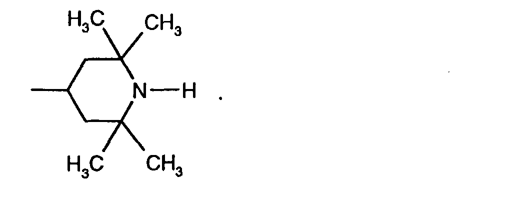
85) 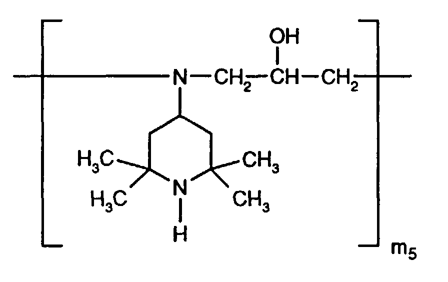
   In the compound 85, the end group bonded to the 2,2,6,6-tetramethylpiperidin-4-ylamino residue can be, for example, hydrogen and the end group bonded to the 2-hydroxypropylene residue can be, for example, 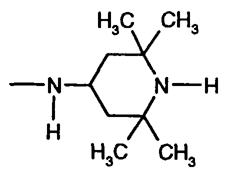
86) 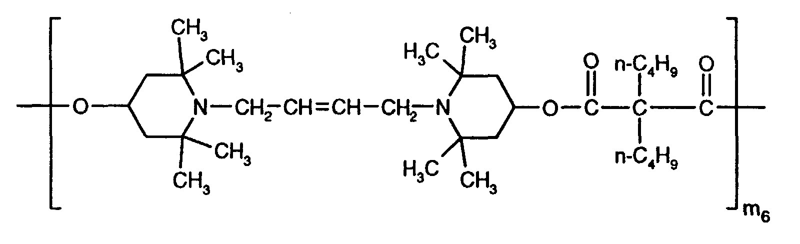
   In the compound 86, the end group bonded to the -O- can be, for example, hydrogen or 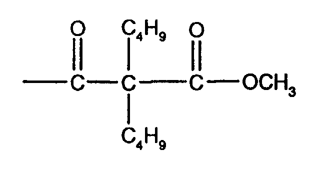 and the end group bonded to the diacyl residue can be, for example, -OCH₃ or Cl.
87) 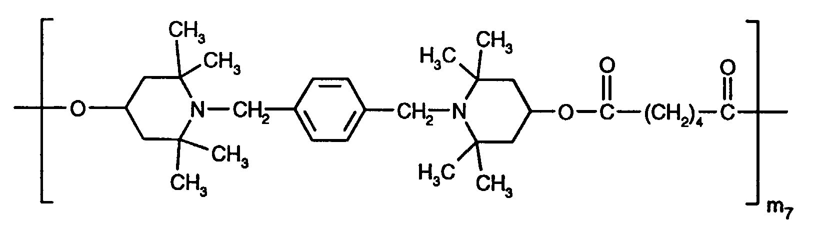 In the compound 87, the end group bonded to the -O- can be, for example, hydrogen or 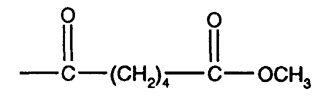 and the end group bonded to the diacyl radical can be, for example, -OCH₃ or Cl.
88) 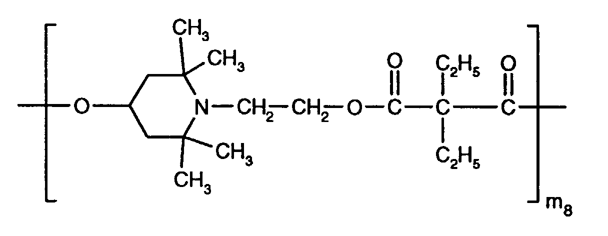
   In the compound 88, the end group bonded to the -O- can be, for example, hydrogen or 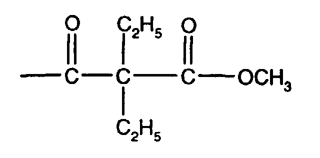 and the end group bonded to the diacyl radical can be, for example, -OCH₃ or Cl.
89) 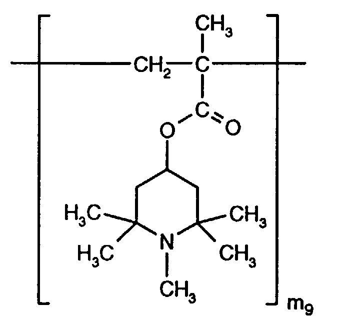
   In the compound 89, the end group bonded to the -CH₂- can be, for example, hydrogen and the end group bonded to the ester residue can be, for example, 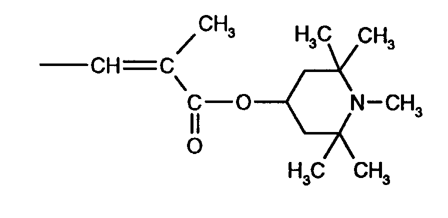
90) 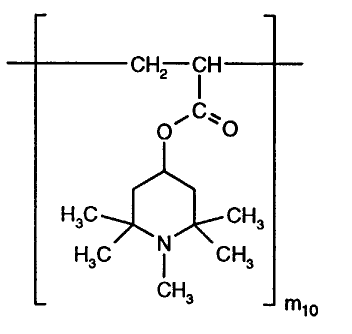
   In the compound 90, the end group bonded to the -CH₂- can be, for example, hydrogen and the end group bonded to the ester residue can be, for example, 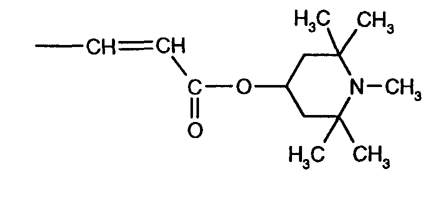
91) 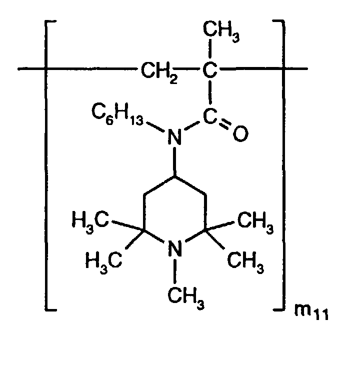
   In the compound 91, the end group bonded to the -CH₂- can be, for example, hydrogen and the end group bonded to the amide residue can be, for example, 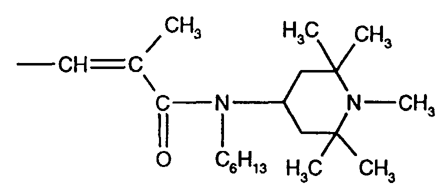
92) 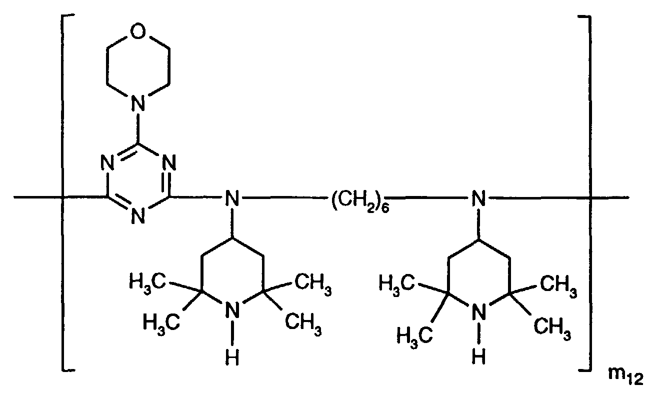
   In the compound 92, the end group bonded to the triazine residue can be, for example, chlorine or a group 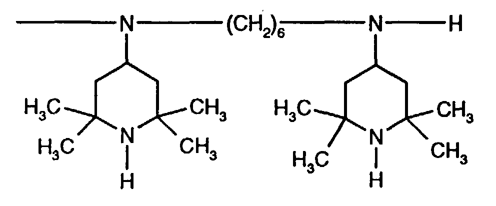 and the end group bonded to the diamino residue can be, for example, hydrogen or a group 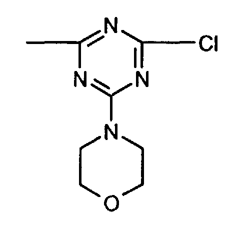
   It may be convenient to replace the chlorine attached to the triazine by e.g. -OH or an amino group. Suitable amino groups are typically: pyrrolidin-1-yl, morpholino, -NH₂, -N(C₁-C₈alkyl)₂ and -NY'(C₁-C₈alkyl) wherein Y' is hydrogen or a group of the formula 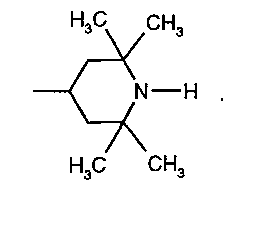
93) 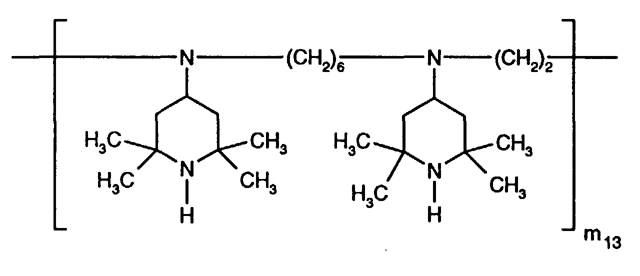
   In the compound 93, the end group bonded to the diamino residue can be, for example, hydrogen and the end group bonded to the -CH₂CH₂- residue can be, for example, 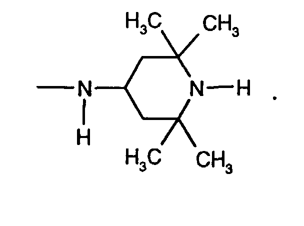
94) 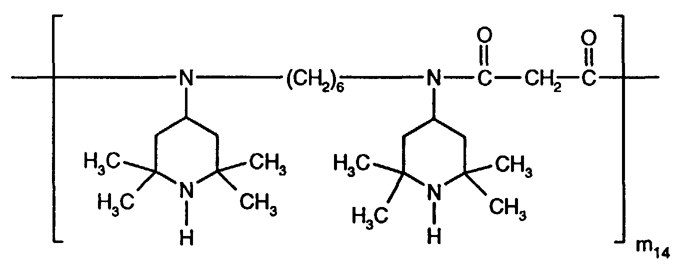
   In the compound 94, the end group bonded to the diamino residue can be, for example, hydrogen and the end group bonded to the diacyl residue can be, for example, Cl.
95)

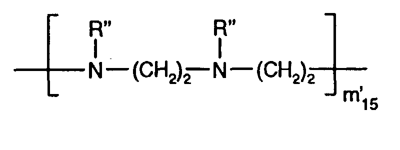

in which R'' is a group of the formula 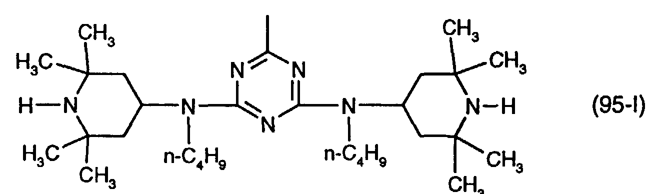 or the chain branching 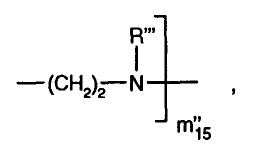
R''' is a group of the formula (95-I), and
m'₁₅ and m''₁₅ are each a number from 0 to 200, preferably 0 to 100, in particular 0 to 50, with the proviso that m'₁₅ + m''₁₅ is a number from 2 to 200, preferably 2 to 100, in particular 2 to 50. In the compound 95, the end group bonded to the diamino residue can be, for example, hydrogen and the end group bonded to the -CH₂CH₂- group can be, for example, halogen, in particular Cl or Br.

Further examples for polymeric compounds are:

### 1) A compound of the formula (96-I) or (96-II)

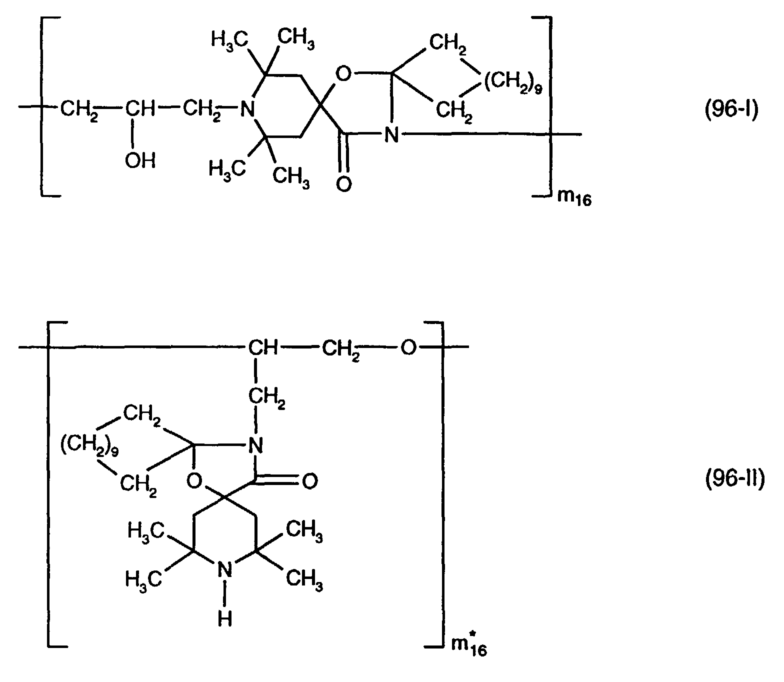

wherein m₁₆ and m₁₆* are a number from 2 to 50.

During the preparation, the compounds of the formulae (96-I) and (96-II) can be obtained together as a mixture and therefore, can also be employed as such. The (96-I):(96-II) ratio is, for example, from 20:1 to 1:20 or from 1:10 to 10:1.

In the compounds of the formula (96-I), the terminal group bonded to the nitrogen can be, for example, hydrogen and the terminal group bonded to the 2-hydroxypropylene radical can be, for example, a 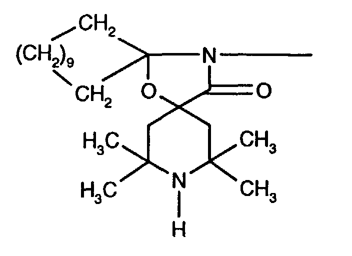 group.

In the compounds of the formula (96-II), the terminal group bonded to the dimethylene radical can be, for example, -OH, and the terminal group bonded to the oxygen can be, for example, hydrogen. The terminal groups can also be polyether radicals.

### 2) A compound of the formula (97)

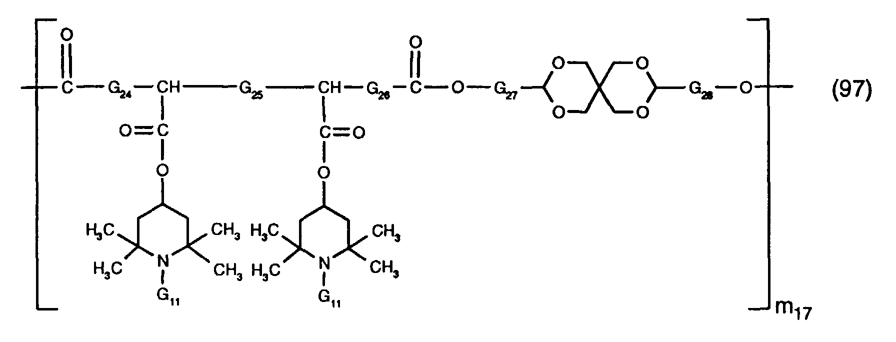

wherein G₂₄, G₂₅, G₂₆, G₂₇ and G₂₈, independently of one another, are a direct bond or C₁-C₁₀alkylene, G₁₁ is as defined under (a') and m₁₇ is a number from 1 to 50.

In the compound of the formula (97), the end group bonded to the 〉C=O group can be, for example, 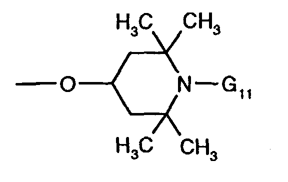 and the end group bonded to the oxygen can be, for example

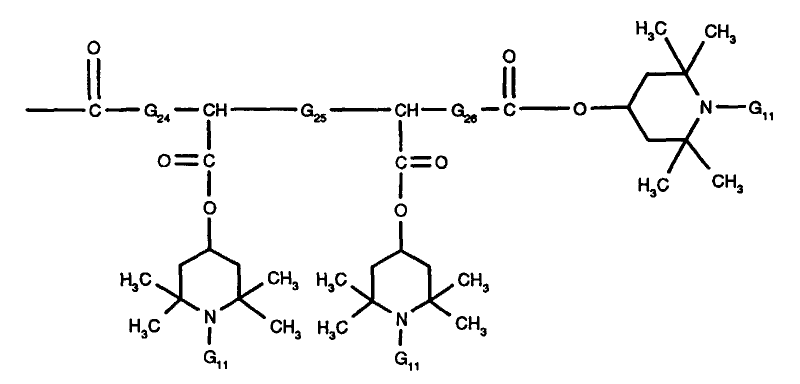

Preferred are the following two compounds: 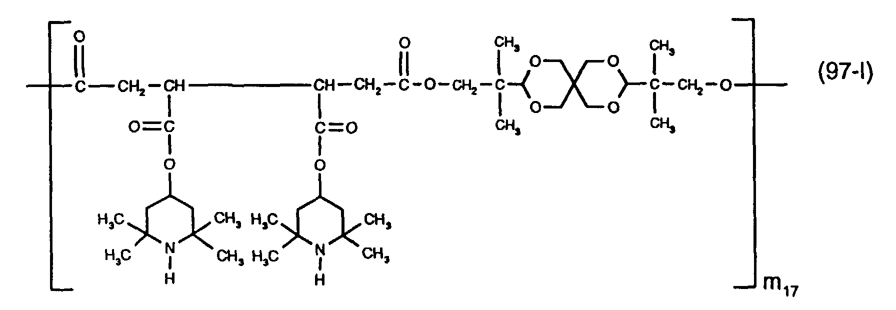 and 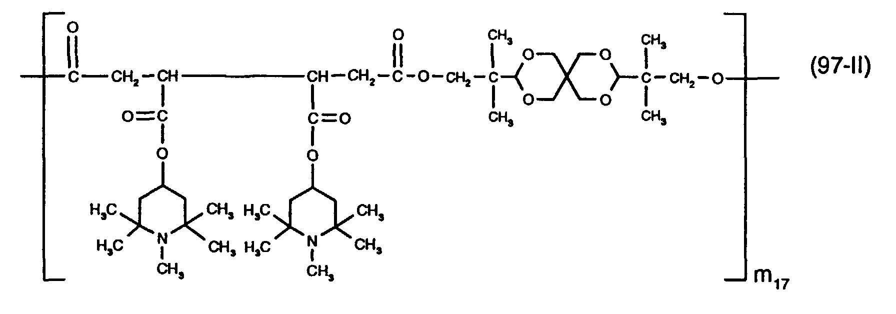
wherein the mean value of m₁₇ is 2.5.

### 3) A compound of the formula (98)

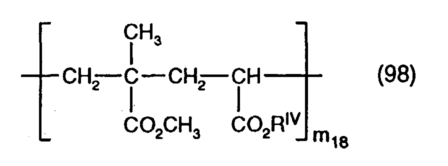

in which approximately one third of the radicals R^{IV} are -C₂H₅ and the others are a group 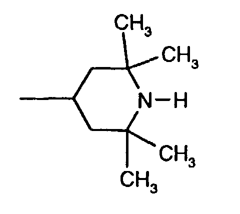
and m₁₈ is a number in the range from 2 to 200, preferably 2 to 100, in particular 2 to 50.

In the compound (98), the end group bonded to the -CH₂- residue can be, for example, hydrogen and the end group bonded to the CH(CO₂R^{IV})- residue can be, for example, -CH=CH-COOR^{IV}.

### 4) A compound of the formula (99)

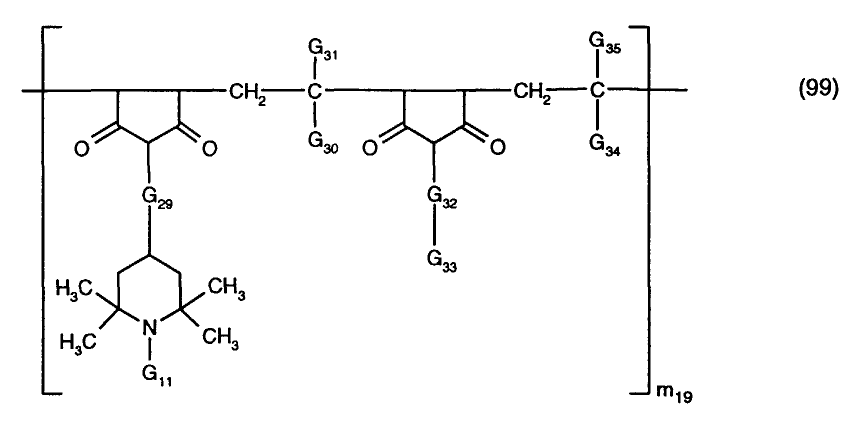

in which G₁₁ is as defined under (a'), G₂₉ and G₃₂, independently of one another, are a direct bond or a -N(X₁)-CO-X₂-CO-N(X₃)- group, where X₁ and X₃, independently of one another, are hydrogen, C₁-C₈alkyl, C₅-C₁₂cycloalkyl, phenyl, C₇-C₈phenylalkyl or a group of the formula (99-1) 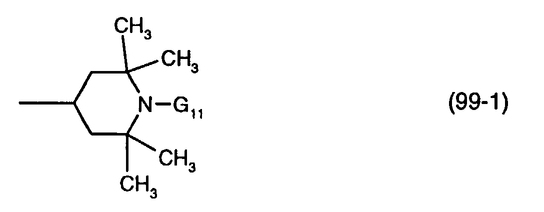
and X₂ is a direct bond or C₁-C₄alkylene, G₃₀, G₃₁, G₃₄ and G₃₅, independently of one another, are hydrogen, C₁-C₃₀alkyl, C₅-C₁₂cycloalkyl or phenyl, G₃₃ is hydrogen, C₁-C₃₀alkyl, C₅-C₁₂cycloalkyl, C₇-C₉phenylalkyl, phenyl or a group of the formula (99-1), and m₁₉ is a number from 1 to 50.

In the compounds of the formula (99), the end group bonded to the 2,5-dioxopyrrolidine ring can be, for example, hydrogen, and the end group bonded to the -C(G₃₄)(G₃₅)- radical can be, for example,

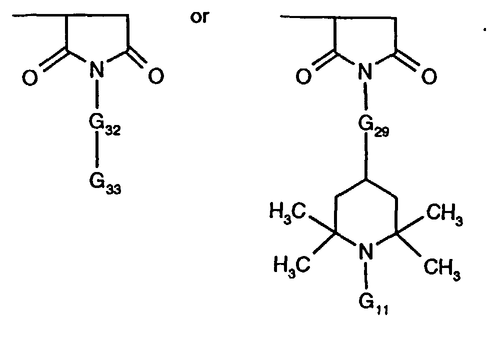

Examples of the compounds of the formula (99) are: 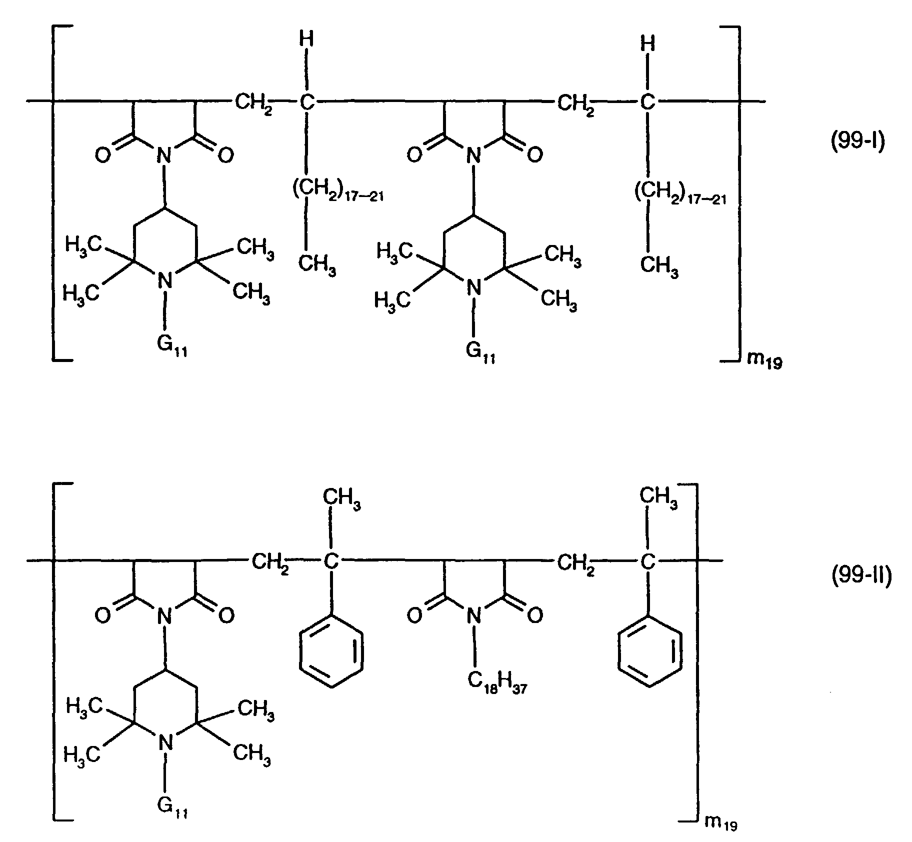 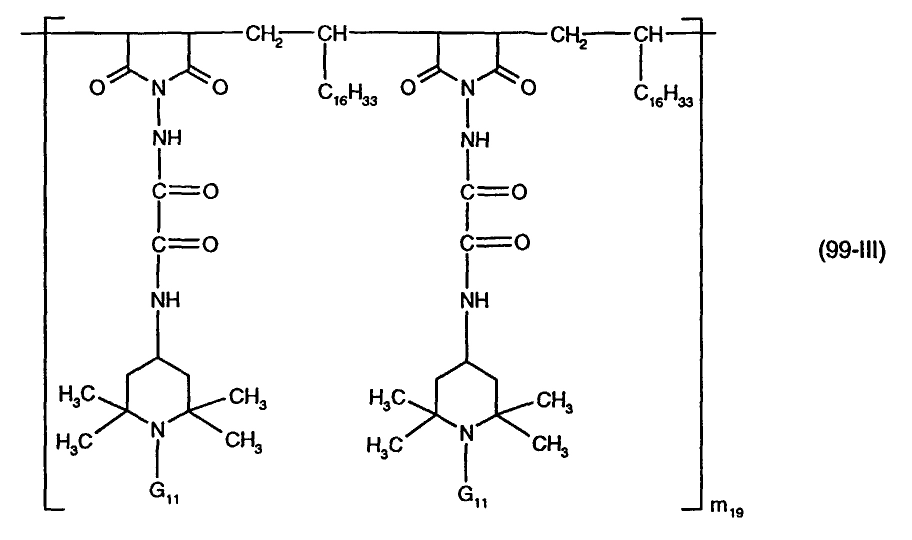
wherein G₁₁ is hydrogen or methyl, and m₁₉ is a number from 1 to 25.

### 5) A product obtainable by reacting a product, obtained by reaction of a polyamine of the formula (100a) with cyanuric chloride, with a compound of the formula (100b)

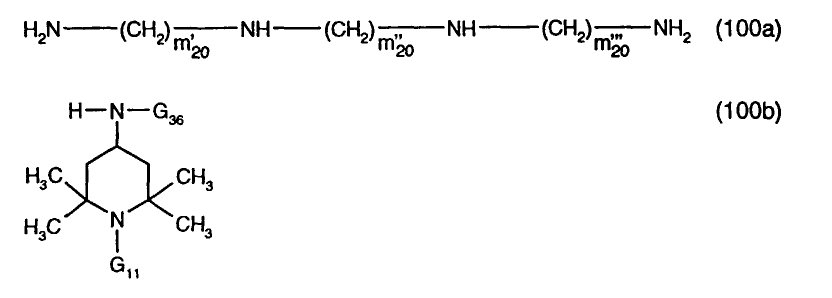

in which m'₂₀, m''₂₀ and m'''₂₀, independently of one another, are a number from 2 to 12,
G₃₆ is hydrogen, C₁-C₁₂alkyl, C₅-C₁₂cycloalkyl, phenyl or C₇-C₉phenylalkyl, and
G₁₁ is as defined under (a'). This product has the Chemical Abstracts-CAS No. 136 504-96-6.

In general, the above reaction product can be represented for example by a compound of the formula 100-1, 100-2 or 100-3. It can also be in the form of a mixture of these three compounds.

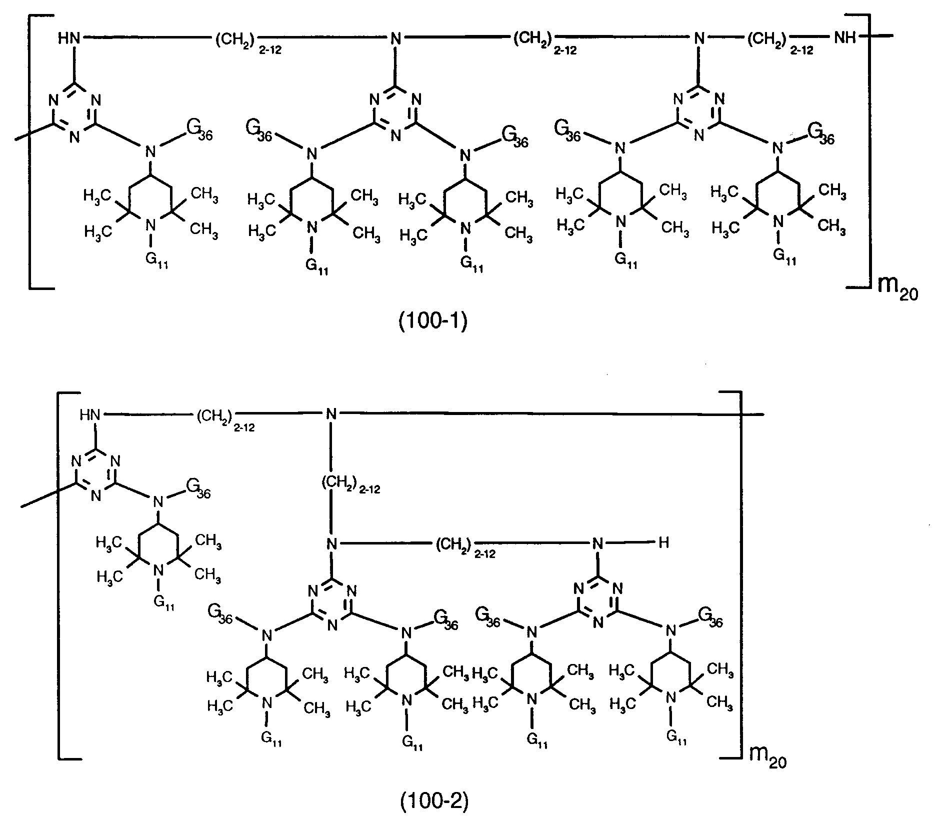

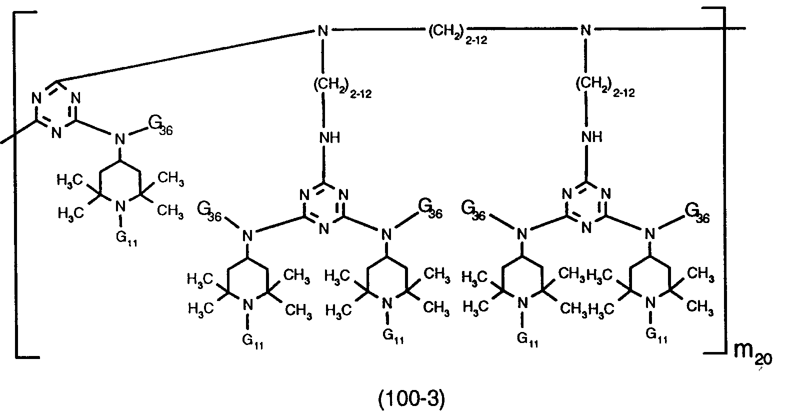

A preferred meaning of the formula (100-1) is

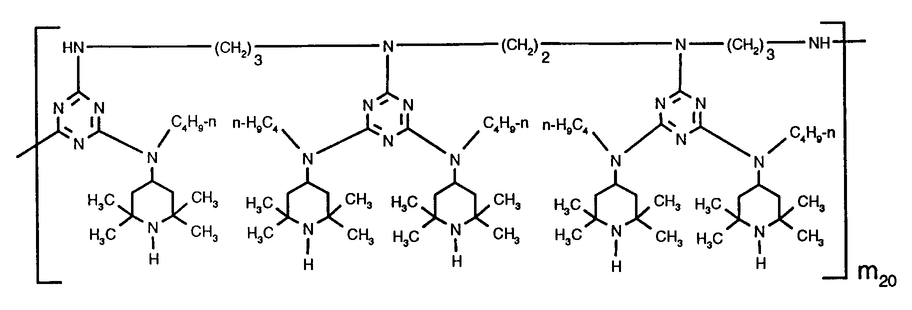

A preferred meaning of the formula (100-2) is

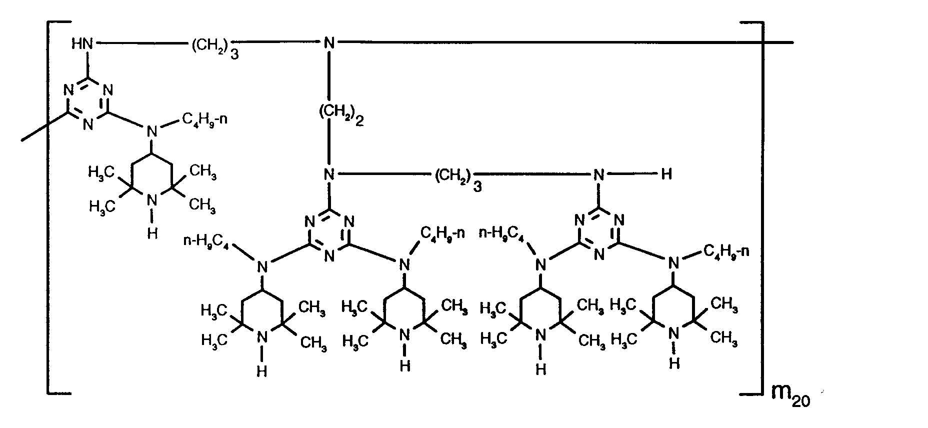

A preferred meaning of the formula (100-3) is

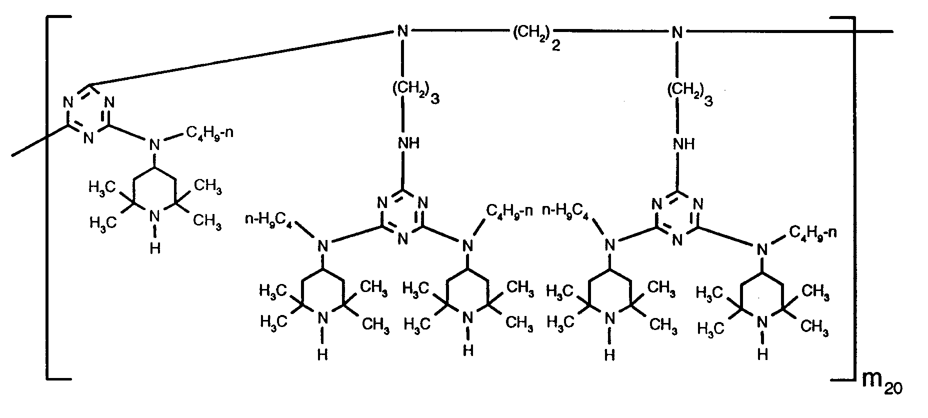

In the above formulae 100-1 to 100-3, m₂₀ is preferably 1 to 20.

### 6) A compound of the formula (101)

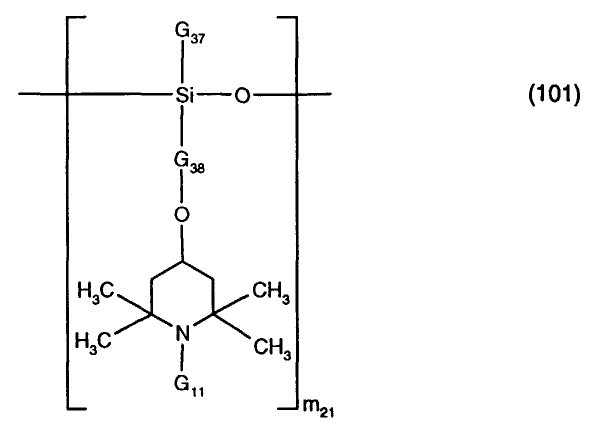

in which G₁₁ is as defined under (a'), G₃₇ is C₁-C₁₀alkyl, C₅-C₁₂cycloalkyl, C₁-C₄alkyl-substituted C₅-C₁₂cycloalkyl, phenyl or C₁-C₁₀alkyl-substituted phenyl, G₃₈ is C₃-C₁₀alkylene and m₂₁ is a number from 1 to 50.

In the compounds of the formula (101), the terminal group bonded to the silicon atom can be, for example, (G₃₇)₃Si-O-, and the terminal group bonded to the oxygen can be, for example, -Si(G₃₇)₃.

The compounds of the formula (101) can also be in the form of cyclic compounds if m₂₁ is a number from 3 to 10, i.e. the free valences shown in the structural formula then form a direct bond.

An example of a compound of the formula (101) is 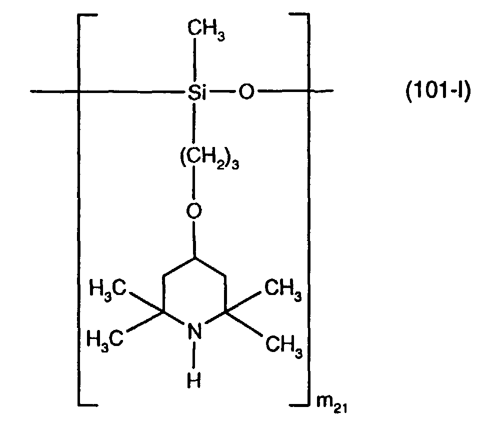
with m₂₁ being a number from 1 to 20.

In the above shown oligomeric and polymeric compounds,
examples of alkyl are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethyl-hexyl, 1,1,3-trimethylhexyl, 1,1,3,3-tetramethylpentyl, nonyl, decyl, undecyl, 1-methyl-undecyl, dodecyl, 1,1,3,3,5,5-hexamethylhexyl, tridecyl, tetradecyl, pentadecyl, hexadecyl, heptadecyl, octadecyl, eicosyl and docosyl;
examples of cycloalkyl are cyclopentyl, cyclohexyl, cycloheptyl and cyclooctyl; an example of C₇-C₉phenylalkyl is benzyl; and
examples of alkylene are ethylene, propylene, trimethylene, tetramethylene, pentamethylene, 2,2-dimethyltrimethylene, hexamethylene, trimethylhexamethylene, octamethylene and decamethylene.

### (h') A compound of the formula (Ih)

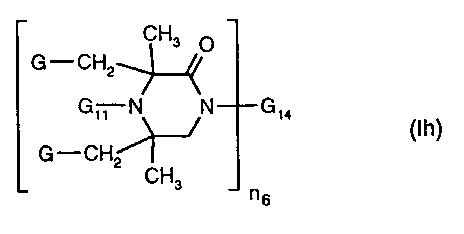

in which n₆ is the number 1 or 2, G and G₁₁ are as defined under (a'), and G₁₄ is as defined under (b'), but G₁₄ cannot be -CONH-Z and -CH₂-CH(OH)-CH₂-O-D-O-.

Examples of such compounds are the following:
102) 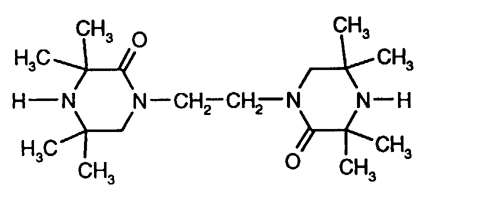
103) 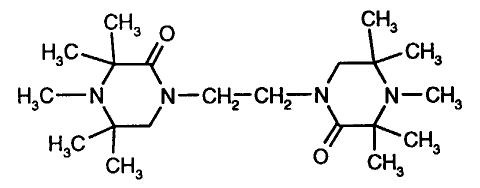
104)

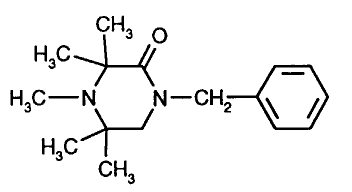

### (i') A compound of the formula (Ii)

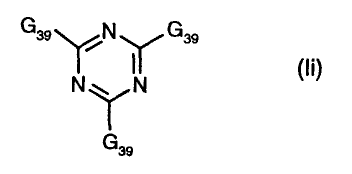

wherein the radicals G₃₉, independently of one another, are a group of the formula (Ii-1) 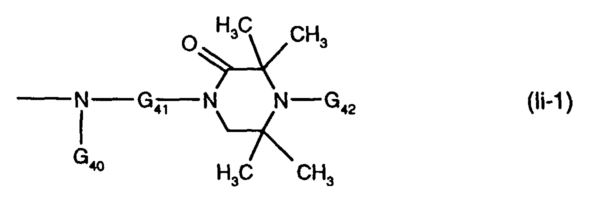
in which G₄₀ is C₁-C₁₂alkyl or C₅-C₁₂cycloalkyl, G₄₁ is C₂-C₁₂alkylene and G₄₂ is hydrogen, C₁-C₈alkyl, -O^{·}, -CH₂CN, C₃-C₆alkenyl, C₇-C₉phenylalkyl, C₇-C₉phenylalkyl which is substituted on the phenyl radical by C₁-C₄alkyl; or C₁-C₈acyl.

Alkyl is for example C₁-C₄alkyl, in particular methyl, ethyl, propyl or butyl.

Cycloalkyl is preferably cyclohexyl.

Alkylene is for example ethylene, propylene, trimethylene, tetramethylene, pentamethylene, 2,2-dimethyltrimethylene or hexamethylene.

Alkenyl is preferably allyl.

Phenylalkyl is preferably benzyl.

Acyl is preferably acetyl.

Examples of compounds from this class are the compounds of the following formulae:
105) 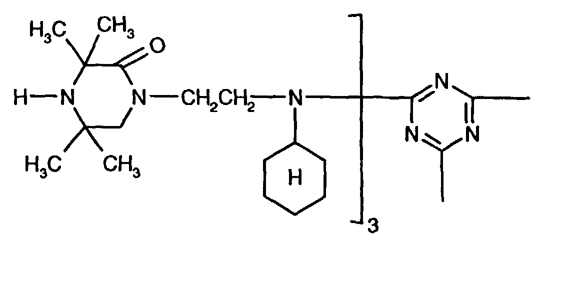
106)

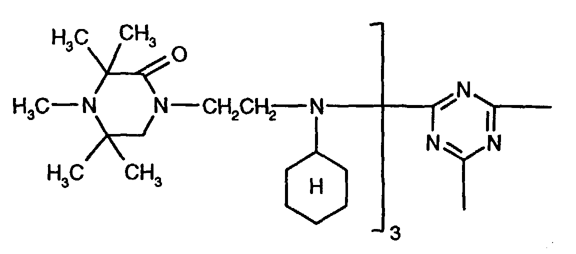

The sterically hindered amine (component (A)) is preferably one of the above compounds 1 to 106. The compounds 5, 13, 14, 24, 25, 36a, 36b, 49-a, 75, 80-a, 81, 84-1, 84-2, 92, 93, 96-I, 96-II, 97-1, 97-2, 99-1, 101-1, 105 and 106 are of interest. The compounds 13, 14, 24, 75, 80-a, 81, 84-1, 92, 96-I, 96-II, 99-1 and 101-1 are preferred and the compounds 13, 14, 81, 84-1, 84-2 and 92 are particularly preferred. The compounds 81, 84-1, 84-2 and 92, in particular 81 and 84-1 are of special interest.

Examples of the phenolic antioxidant (component (C)) are:
Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butyl-phenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tri-cyclohexylphenol, 2,6-di-tert-butyl-4-methoxymethylphenol, nonylphenols which are linear or branched in the side chains, for example, 2,6-di-nonyl-4-methyl-phenol, 2,4-dimethyl-6-(1'-methylundec-1'-yl)phenol, 2,4-dimethyl-6-(1'-methyl-heptadec-1'-yl)phenol, 2,4-dimethyl-6-(1'-methyltridec-1'-yl)phenol and mixtures thereof.
Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
Hydroquinones and alkylated hydroquinones, for example 2,6-di-tert-butyl-4--methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxy-phenyl stearate, bis-(3,5-di-tert-butyl-4-hydroxyphenyl) adipate.
Hydroxylated thiodiphenyl ethers, for example 2,2'-thiobis(6-tert-butyl-4-methyl-phenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis-(2,6-dimethyl-4-hydroxyphenyl) disulfide.
Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α--methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)-butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3--tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4--hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy2-methylphenyl)pentane.
O-, N- and S-benzyl compounds, for example 3,5,3',5'-tetra-tert-butyl-4,4'-dihydroxydibenzyl ether, octadecyl-4-hydroxy-3,5-di-methylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4--hydroxybenzyl)sulfide, isooctyl-3,5di-tert-butyl-4-hydroxybenzylmercaptoacetate.
Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5--methylbenzyl)-malonate, di-dodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)--2,3,5,6-tetramethylbenzene, 2,4,6-tris(3,5-di-tert-butyl-4-hydroxybenzyl)phenol.
Triazine Compounds, for example 2,4-bis(octylmercapto)-6-(3,5-di-tert-butyl-4--hydroxyanilino)-1,3,5-triazine, 2-octylmercapto-4,6-bis(3,5-di-tert-butyl-4-hydroxy-anilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy3-methylbenzylphosphonate, the calcium salt of the monoethyl ester of 3,5-di-tert-butyl-4-hydroxybenzylphosphonic acid.
Acylaminophenols, for example 4-hydroxylauranilide, 4-hydroxystearanilide, octyl N-(3,5-di-tert-butyl-4-hydroxyphenyl)carbamate.
Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
Esters of β-[3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris-(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
Esters of 3,5-di-tert-butyl-4-hydroxyphenyl acetic acid with mono- or polyhydric alcohols, e.g. with methanol, ethanol, octanol, octadecanol, 1,6-hexanediol, 1,9--nonanediol, ethylene glycol, 1,2-propanediol, neopentyl glycol, thiodiethylene glycol, diethylene glycol, triethylene glycol, pentaerythritol, tris-(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
Amides of β-(3,5-di-tert-butyl-4-hydroxyphenyl)propionic acid e.g. N,N'-bis(3,5-di--tert-butyl-4-hydroxyphenylpropionyl)hexamethylenediamine, N,N'-bis(3,5-di-tert--butyl-4-hydroxyphenylpropionyl)trimethylenediamine, N,N'-bis(3,5-di-tert-butyl-4-hydroxyphenylpropionyl)hydrazine.

The following phenolic antioxidants are preferred:
pentaerythrityl tetrakis[3-(3,5-di-tert-butyl-4-hydroxyphenyl)propionate],
octadecyl 3-(3,5-di-tert-butyl-4-hydroxyphenyl)propionate,
1,3,5-tris-(3,5-di-tert-butyl-4-hydroxybenzyl)isocyanurate,
1,3,5-tris-(3,5-di-tert-butyl-4-hydroxybenzyl)-2,4,6-trimethylbenzene,
ester of β-(5-tert-butyl-4-hydroxy-3-methylphenyl)propionic acid with triethylene glycol,
ester of β-(3,5-di-tert-butyl-4-hydroxyphenyl)propionic acid with 1,6-hexanediol,
the calcium salt of the monoethyl ester of 3,5-di-tert-butyl-4-hydroxybenzylphosphonic acid,
N,N'-bis(3,5-di-tert-butyl-4-hydroxyphenylpropionyl)hexamethylenediamine,
2,4-bis(octylmercapto)-6-(3,5-di-tert-butyl-4-hydroxyanilino)-1,3,5-triazine,
ester of β-(3,5-di-tert-butyl-4-hydroxyphenyl)propionic acid with thiodiethylene glycol,
diethyl-3,5-di-tert-butyl-4-hydroxybenzylphosphonate,
2,2'-thio-bis(6-tert-butyl-4-methylphenol),
N,N'-bis(3,5-di-tert-butyl-4-hydroxyphenylpropionyl)hydrazine,
2,6-di-tert-butyl-4-methylphenol,
1,1,3-tris(5-tert-butyl-4-hydroxy-2-methylphenyl)butane,
2,2'-methylenebis(6-tert-butyl-4-methylphenol),
1,3,5-tris(4-tert-butyl-3-hydroxy-2,6-dimethylbenzyl)isocyanurate,
ethylene glycol bis[3,3-bis(3'-tert-butyl-4'-hydroxyphenyl)butyrate],
4,4'-thio-bis(6-tert-butyl-3-methylphenol) and
2,2'-ethylidenebis(4,6-di-tert-butylphenol).

Phenolic antioxidants which are of interest are
pentaerythrityl tetrakis[3-(3,5-di-tert-butyl-4-hydroxyphenyl)propionate],
octadecyl 3-(3,5-di-tert-butyl-4-hydroxyphenyl)propionate,
1,3,5-tris-(3,5-di-tert-butyl-4-hydroxybenzyl)isocyanurate,
1,3,5-tris-(3,5-di-tert-butyl-4-hydroxybenzyl)-2,4,6-trimethylbenzene,
the calcium salt of the monoethyl ester of 3,5-di-tert-butyl-4-hydroxybenzylphosphonic acid,
1,3,5-tris(4-tert-butyl-3-hydroxy-2,6-dimethylbenzyl)isocyanurate,
ethylene glycol bis[3,3-bis(3'-tert-butyl-4'-hydroxyphenyl)butyrate] and
1,1,3-tris(5-tert-butyl-4-hydroxy-2-methylphenyl)butane.

Particularly preferred phenolic antioxidants are
pentaerythrityl tetrakis[3-(3,5-di-tert-butyl-4-hydroxyphenyl)propionate],
octadecyl 3-(3,5-di-tert-butyl-4-hydroxyphenyl)propionate and
1,3,5-tris-(3,5-di-tert-butyl-4-hydroxybenzyl)isocyanurate.

A further preferred embodiment of this invention is a polyolefin containing additionally an organic phosphite or phosphonite (component (D)) such as
triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite,
tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite,
tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methylphosphite, bis(2,4-di-tert-butyl-6-methylphenyl)ethylphosphite or
the phosphite of the formula 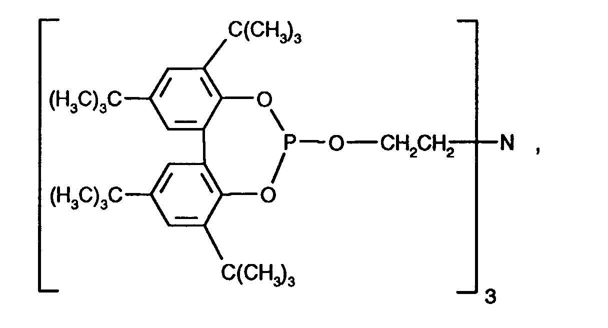
the phosphite of the formula 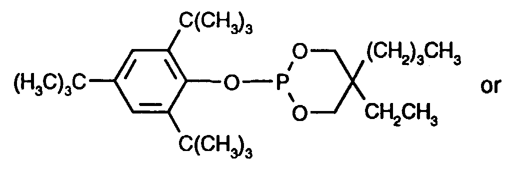
the phosphite of the formula

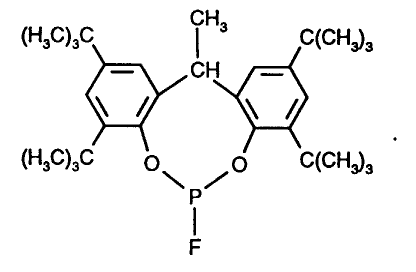

Organic phosphites or phosphonites which are preferred are
tris(2,4-di-tert-butylphenyl) phosphite,
tetrakis(2,4-di-tert-butylphenyl) 4,4'-biphenylene diphosphonite,
bis(2,4-di-tert-butyl-6-methylphenyl) ethyl phosphite,
tri-nonylphenyl phosphite,
distearyl pentaerythritol diphosphite,
bis(2,4-di-tert-butylphenyl) pentaerythritol diphosphite,
trilauryl phosphite,
bis(2,6-di-tert-butyl-4-methylphenyl) pentaerythtitol diphosphite,
the phosphite of the formula 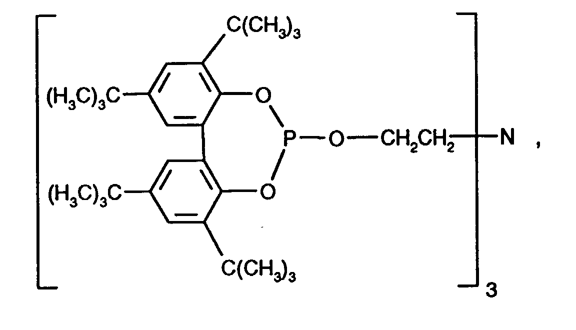
the phosphite of the formula 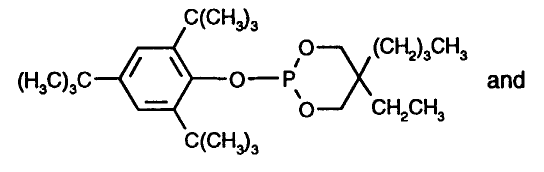
the phosphite of the formula

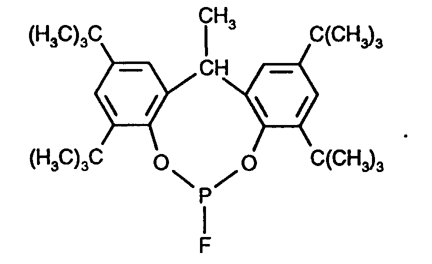

Particularly preferred organic phosphites or phosphonites are
tris(2,4-di-tert-butylphenyl) phosphite,
tetrakis(2,4-di-tert-butylphenyl) 4,4'-biphenylene diphosphonite,
bis(2,4-di-tert-butyl-6-methylphenyl) ethyl phosphite,
bis(2,4-di-tert-butylphenyl) pentaerythritol diphosphite,
bis(2,6-di-tert-butyl-4-methylphenyl) pentaerythritol diphosphite and
the phosphite of the formula
the phosphite of the formula

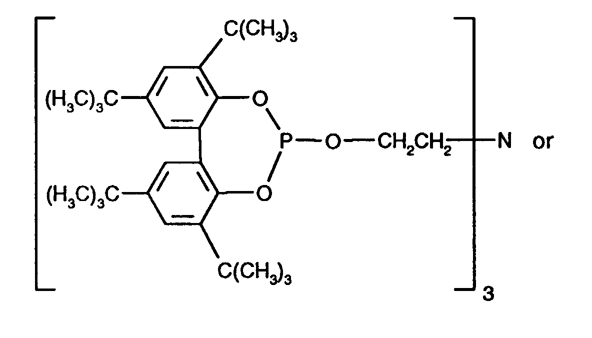

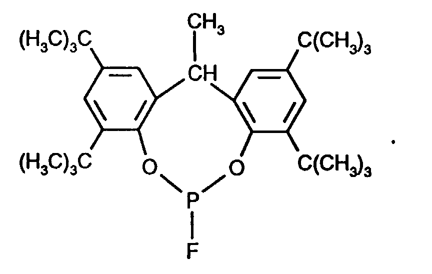

Organic phosphites or phosphonites which are of particular interest are
tris(2,4-di-tert-butylphenyl) phosphite,
tetrakis(2,4-di-tert-butylphenyl) 4,4'-biphenylene diphosphonite,
bis(2,4-di-tert-butyl-6-methylphenyl) ethyl phosphite,
bis(2,4-di-tert-butylphenyl) pentaerythritol diphosphite and
the phosphite of the formula

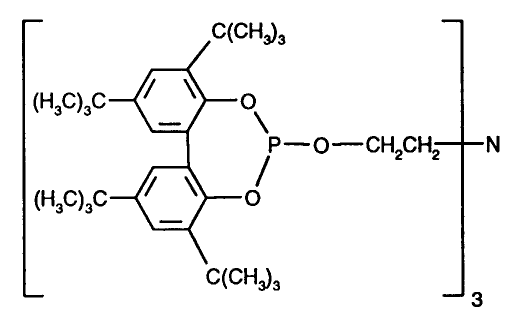

It is also possible to replace 5 to 100 % by weight of the amount of the phosphite or phosphonite, in particular of tris(2,4-di-tert-butylphenyl) phosphite, by the following compound (CAS No. 181314-48-7).

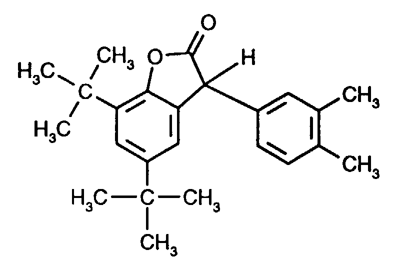

A further preferred embodiment of this invention is a polyolefin containing optionally component (D) as defined above and additionally
**(E1)** a pigment or
**(E2)** an UV absorber or
**(E3)** a pigment and an UV absorber.

The pigment (component (E1)) may be an inorganic or organic pigment.

Examples of inorganic pigments are titanium dioxide, zinc oxide, carbon black, cadmium sulfide, cadmium selenide, chromium oxide, iron oxide, lead oxide and so on.

Examples of organic pigments are azo pigments, anthraquinones, phthalocyanines, tetrachloroisoindolinones, quinacridones, isoindolines, perylenes, pyrrolopyrroles (such as Pigment Red 254) and so on.

All pigments described in "Gächter'Müller Plastics Additives Handbook, 3rd Edition, Hanser Publishers, Munich Vienna New York", page 647 to 659, point 11.2.1.1 to 11.2.4.2 can be used as component (E1).

A particularly preferred pigment is titanium dioxide, optionally in combination with an organic pigment.

Examples of such organic pigments are:
C.I. (Colour Index) Pigment Yellow 93, C.I. Pigment Yellow 95, C.I. Pigment Yellow 138, C.I. Pigment Yellow 139, C.I. Pigment Yellow 155, C.I. Pigment Yellow 162, C.I. Pigment Yellow 168, C.I. Pigment Yellow 180, C.I. Pigment Yellow 183, C.I. Pigment Red 44, C.I. Pigment Red 170, C.I. Pigment Red 202, C.I. Pigment Red 214, C.I. Pigment Red 254, C.I. Pigment Red 264, C.I. Pigment Red 272, C.I. Pigment Red 48:2, C.I. Pigment Red 48:3, C.I. Pigment Red 53:1, C.I. Pigment Red 57:1, C.I. Pigment Green 7, C.I. Pigment Blue 15:1, C.I. Pigment Blue 15:3 and C.I. Pigment Violet 19.

Examples of the UV absorber (component (E2)) are 2-(2'-hydroxyphenyl)benzotriazole, a 2-hydroxybenzophenone, an ester of substituted or unsubstituted benzoic acid, an acrylate, an oxamide, a 2-(2-hydroxyphenyl)-1,3,5-triazine, a monobenzoate of resorcinol or a formamidine.

The 2-(2'-hydroxyphenyl)benzotriazole is e.g. 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol] or the transesterification product of 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃-]₂ where R = 3'-tert--butyl-4'-hydroxy-5'-2H-benzotriazol-2-ylphenyl.

2-(3',5'-Di-tert-butyl-2'-hydroxyphenyl)-5-chloro-benzotriazole, 2-(3'-tert-butyl-2'-hydroxy-5'-methylphenyl)-5-chloro-benzotriazole and 2-(3',5'-di-tert-amyl-2'-hydroxyphenyl)-benzotriazole are preferred.

The 2-hydroxybenzophenone is for example the 4-hydroxy, 4-methoxy, 4-octyloxy, 4-decyloxy, 4-dodecyloxy, 4-benzyloxy, 4,2',4'-trihydroxy or 2'-hydroxy-4,4'-dimethoxy derivatives.

2-Hydroxy-4-octyloxybenzophenone is preferred.

The ester of a substituted or unsubstituted benzoic acid is for example 4-tert-butyl-phenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate or 2-methyl-4,6-di-tert-butylphenyl 3,5-di-tert-butyl-4-hydroxybenzoate.

2,4-Di-tert-butylphenyl 3,5-di-tert-butyl-4-hydroxybenzoate and hexadecyl 3,5-di-tert-butyl-4-hydroxybenzoate are preferred.

The acrylate is for example ethyl α-cyano-β,β-diphenylacrylate, isooctyl a-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate or N-(β-carbomethoxy-β-cyanovinyl)-2-methylindoline.

The oxamide is for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide or its mixture with 2-ethoxy-2'-ethyl-5,4'-di-tert-butoxanilide or mixtures of ortho- and paramethoxy-disubstituted oxanilides or mixtures of o- and p-ethoxy-disubstituted oxanilides.

The 2-(2-hydroxyphenyl)-1,3,5-triazine is for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-di-methylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine or 2-(2-hydroxyphenyl)-4-(4-methoxyphenyl)-6-phenyl-1,3,5-triazine.

2-(2-Hydroxy-4-octyloxyphenyl)-4,6-bis(2,4-dimethylphenyl)-1,3,5-triazine and 2-(2-hydroxy-4-hexyloxy)phenyl-4,6-diphenyl-1,3,5-triazine are preferred.

The monobenzoate of resorcinol is for example the compound of the formula

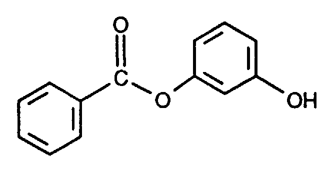

The formamidine is for example the compound of the formula

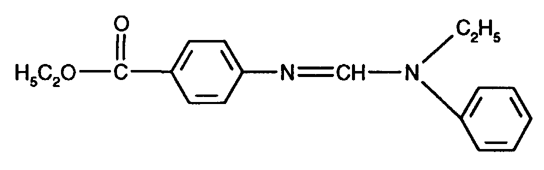

The UV absorber is in particular a 2-(2'-hydroxyphenyl)benzotriazole, a 2-hydroxybenzophenone or a hydroxyphenyltriazine.

Examples of polyolefins are listed below.
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, specific polyethylenes (which optionally can be crosslinked), for example medium density polyethylene (MDPE), low density polyethylene (LDPE), linear low density polyethylene (LLDPE), branched low density polyethylene (BLDPE).
   Polyolefins, i.e. the polymers of monoolefins exemplified in the preceding paragraph, preferably the polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with the specific polyethylenes (for example PP/LDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

The polyolefins listed above under item 1 are preferred. Polypropylene is particularly preferred.

The components (A), (B), (C) and optionally (D), (E1) and/or (E2) may be added to the polyolefin either individually or mixed with one another.

The sterically hindered amine compound (component (A)) is present in the polyolefin in an amount of preferably 0.01 to 5 %, in particular 0.05 to 1 %, relative to the weight of the polyolefin.

CaO and/or Ca(OH)₂ (component (B)) is present in the polyolefin in an amount of preferably 0.01 to 5 %, in particular 0.05 to 1 %, relative to the weight of the polyolefin.

The phenolic antioxidant (component (C)) is present in the polyolefin in an amount of preferably 0.01 to 1 %, in particular 0.05 to 0.5 %, relative to the weight of the polyolefin.

The total amount of the phenolic antioxidant (component (C)) and optionally the organic phosphite or phosphonite (component (D)) is preferably 0.01 to 1 %, in particular 0.05 to 0.5 %, relative to the weight of the polyolefin. The weight ratio of component (C) to component (D) is for example 1:10 to 10:1, preferably 1:5 to 5:1.

The pigment (component (E1)) is optionally present in the polyolefin in an amount of preferably 0.01 to 10 %, relative to the weight of the polyolefin.

The UV absorber (component (E2)) is optionally present in the polyolefin in an amount of preferably 0.01 to 1 %, relative to the weight of the polyolefin.

The total amount of component (E3) (the pigment in combination with the UV absorber) is preferably 0.01 to 10 %, relative to the weight of the polyolefin. The weight ratio of the UV absorber to the pigment is for example 2:1 to 1:10.

When the pigment used is titanium dioxide in combination with an organic pigment as described above, titanium dioxide is preferably present in the polyolefin in an amount of 0.01 to 5 %, relative to the weight of the polyolefin, and the organic pigment may be present in the polyolefin in an amount of, for example, 0.01 to 2%, relative to the weight of the polyolefin.

The weight ratio of the components (A):(B) is preferably 20:1 to 1:5.

The weight ratio of the components (A):(C) is preferably 20:1 to 1:5.

The weight ratio of the components (A):(D) is preferably 20:1 to 1:10.

The weight ratio of the components (A):(E1) is preferably 10:1 to 1:10.

The weight ratio of the components (A):(E2) is preferably 20:1 to 1:2.

The weight ratio of the components (A):(E3) is preferably 10:1 to 1:10.

The above components can be incorporated into the polyolefin by known methods, for example before or during shaping or by applying the dissolved or dispersed compounds to the polyolefin, if necessary with subsequent evaporation of the solvent. The components can be added to the polyolefin in the form of a powder, granules or a masterbatch, which contains these components in, for example, a concentration of from 2.5 to 25% by weight.

If desired, the components (A), (B), (C) and optionally (D) (E1) and/or (E2) can be melt blended with each other before incorporation in the polyolefin. They can be added to the polyolefin before or during the polymerization or before the crosslinking.

The polyolefins according to this invention can be used in a wide variety of forms, for example as films, fibres, tapes, moulding compositions, profiles or as binders for paints, adhesives or putties.

The stabilized polyolefin may additionally also contain various conventional additives, for example:
1. Antioxidants
   Tocopherols, for example α-tocopherol, β-tocopherol, γ-tocopherol, δ-tocopherol and mixtures thereof (Vitamin E).
   Ascorbic acid (vitamin C)
   Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylamino-phenol, 4-dodecanoylaminophenol, 4-octadecanoylaminophenol, bis-(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, Bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-buty/tert-octylphenothiazines, a mixture of mono- und dialkylated tert-octyl-phenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
   Nickel compoundso, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridecyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.
7. Thiosynergists, for example, dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or tin pyrocatecholate.
10. Nucleating agents, for example, inorganic substances such as talcum, metal oxides such as titanium dioxide or magnesium oxide, phosphates, carbonates or sulfates of, preferably, alkaline earth metals; organic compounds such as mono-or polycarboxylic acids and the salts thereof, e.g. 4-tert-butylbenzoic acid, adipic acid, diphenylacetic acid, sodium succinate or sodium benzoate; polymeric compounds such as ionic copolymers ("ionomers").
11. Fillers and reinforcing agents, for example, calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
12. Other additives, for example, plasticisers, lubricants, emulsifiers, pigments, rheology additives, catalysts, flow-control agents, optical brighteners, flameproofing agents, antistatic agents and blowing agents.
13. Benzofuranones and indolinones, for example those disclosed in US-A-4325863, US-A-4338244, US-A-5175312, US-A-5216052, US-A-5252643, DE-A-4316611, DE-A-4316622, DE-A-4316876, EP-A-0589839 or EP-A-0591102 or 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one.

The weight ratio of the total amount of components (A), (B), (C) and optionally (D), (E1) and/or (E2) to the conventional additives can be, for example, from 1:0.1 to 1:5.

This invention furthermore relates to a method for stabilizing a polyolefin against degradation induced by light, heat or oxidation, with the proviso that the polyolefin is different from high-density polyethylene, which method comprises incorporating into the polyolefin
(A) a sterically hindered amine compound,
(B) CaO and/or Ca(OH)₂ and
(C) a phenolic antioxidant.

The example below illustrates the invention in greater detail. All percentages and parts are by weight, unless stated otherwise.
Example 1: Light stabilization of injection molded 2 mm polypropylene plaques. 100 parts of polypropylene powder (melt flow index: 2.4 g/10 min at 230°C and 2160 g) are blended in a barrel mixer with the stabilizer system indicated in Tables 1 and 2. Then, the blend is compounded in an extruder at temperatures of 200°-220°C. The granules obtained on extrusion and granulation are transformed into 2 mm thick plaques at 240°-260°C in an automatic injection molding machine.

The plaques are mounted on sample holders and subjected to natural weathering in Florida (45° South, direct, approximately 140 kLy/year). Periodically, the carbonyl content of the samples is measured with an infrared spectrophotometer. The exposure time corresponding to the formation of a carbonyl absorbance of 0.5 (T_{0.5}) is a measure for the efficiency of the stabilizer system.

The values obtained are summarized in Tables 1 and 2.

**Table 1**

| Stabilizer system | T_{0.5} in kLy^{*)} |
|---|---|
| 0.10% of compound 81), | |
| 0.10% of CaO, | |
| 0.05 % of pentaerythrityl tetrakis[3-(3,5-di-tert-butyl-4-hydroxyphenyl)propionate] and | |
| 0.05 % of tris[2,4-di-tert-butylphenyl] phosphite | 63 |

| | |
|---|---|
| *) High values indicate a good stabilizing efficiency. | |

**Table 2**

| Stabilizer system | T_{0.5} in kLy^{*)} |
|---|---|
| 0.10% of compound 84-1), | |
| 0.10 % of CaO, | |
| 0.05 % of pentaerythrityl tetrakis[3-(3,5-di-tert-butyl-4-hydroxyphenyl)propionate] and | |
| 0.05 % of tris[2,4-di-tert-butylphenyl] phosphite | 150 |

| | |
|---|---|
| *) High values indicate a good stabilizing efficiency. | |

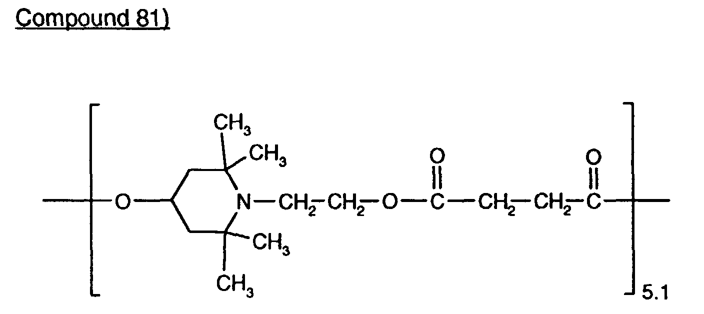

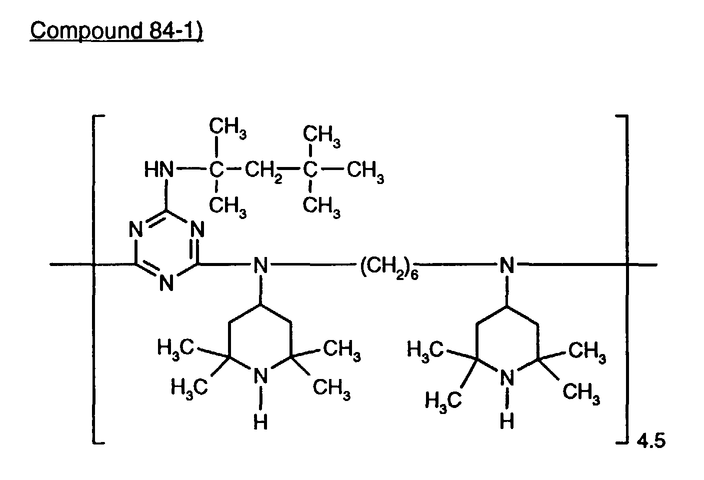

## Claims

1. A polyolefin containing
**(A)** a sterically hindered amine compound,
**(B)** CaO and/or Ca(OH)₂ and
**(C)** a phenolic antioxidant; with the proviso that the polyolefin is different from high-density polyethylene.

2. A polyolefin according to claim 1 wherein the sterically hindered amine compound corresponds to a compound containing at least one group of the formula (I) or (II) 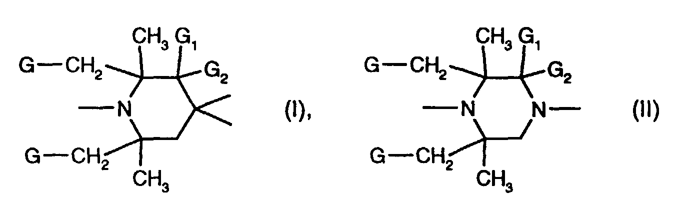
in which G is hydrogen or methyl, and
G₁ and G₂, independently of one another, are hydrogen, methyl or together are a substituent =O.

3. A polyolefin according to claim 1 wherein the sterically hindered amine compound is a compound of the formula 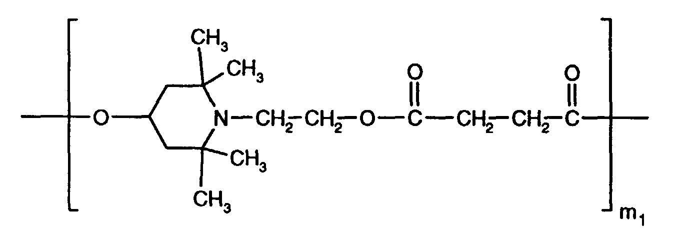
wherein m₁ is a number from 2 to 200;
a compound of the formula 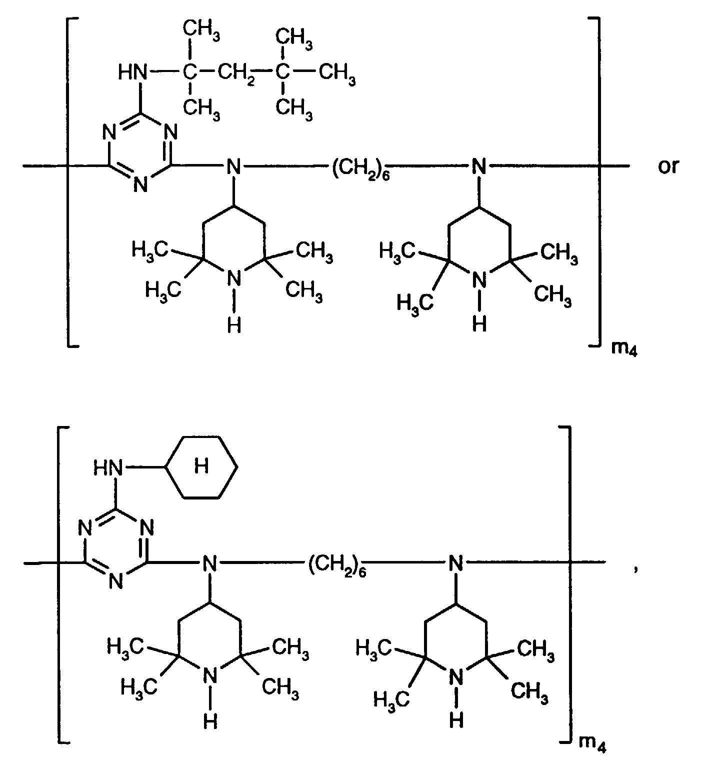
wherein m₄ is a number from 2 to 200, or
a compound of the formula 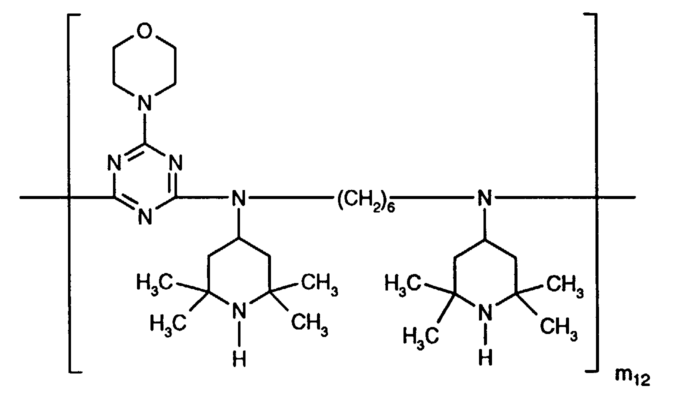
wherein m₁₂ is a number from 2 to 200.

4. A polyolefin according to claim 1 wherein the phenolic antioxidant is
pentaerythrityl tetrakis[3-(3,5-di-tert-butyl-4-hydroxyphenyl)propionate],
octadecyl 3-(3,5-di-tert-butyl-4-hydroxyphenyl)propionate,
1,3,5-tris-(3,5-di-tert-butyl-4-hydroxybenzyl)isocyanurate,
1,3,5-tris-(3,5-di-tert-butyl-4-hydroxybenzyl)-2,4,6-trimethylbenzene,
ester of β-(5-tert-butyl-4-hydroxy-3-methylphenyl)propionic acid with triethylene glycol,
ester of β-(3,5-di-tert-butyl-4-hydroxyphenyl)propionic acid with 1,6-hexanediol,
the calcium salt of the monoethyl ester of 3,5-di-tert-butyl-4-hydroxybenzylphosphonic acid,
N,N'-bis(3,5-di-tert-butyl-4-hydroxyphenylpropionyl)hexamethylenediamine,
2,4-bis(octylmercapto)-6-(3,5-di-tert-butyl-4-hydroxyanilino)-1,3,5-triazine,
ester of β-(3,5-di-tert-butyl-4-hydroxyphenyl)propionic acid with thiodiethylene glycol,
diethyl-3,5-di-tert-butyl-4-hydroxybenzylphosphonate,
2,2'-thio-bis(6-tert-butyl-4-methylphenol),
N,N'-bis(3,5-di-tert-butyl-4-hydroxyphenylpropionyl)hydrazine,
2,6-di-tert-butyl-4-methylphenol,
1,1,3-tris(5-tert-butyl-4-hydroxy-2-methylphenyl)butane,
2,2'-methylenebis(6-tert-butyl-4-methylphenol),
1,3,5-tris(4-tert-butyl-3-hydroxy-2,6-dimethylbenzyl)isocyanurate,
ethylene glycol bis[3,3-bis(3'-tert-butyl-4'-hydroxyphenyl)butyrate],
4,4'-thio-bis(6-tert-butyl-3-methylphenol) or
2,2'-ethylidenebis(4,6-di-tert-butylphenol).

5. A polyolefin according to claim 1, containing additionally
**(D)** an organic phosphite or phosphonite.

6. A polyolefin according to claim 5 wherein the organic phosphite or phosphonite is
tris(2,4-di-tert-butylphenyl) phosphite,
tetrakis(2,4-di-tert-butylphenyl) 4,4'-biphenylene diphosphonite,
bis(2,4-di-tert-butyl-6-methylphenyl) ethyl phosphite,
tri-nonylphenyl phosphite,
distearyl pentaerythritol diphosphite,
bis(2,4-di-tert-butylphenyl) pentaerythritol diphosphite,
trilauryl phosphite,
bis(2,6-di-tert-butyl-4-methylphenyl) pentaerythritol diphosphite,
the phosphite of the formula 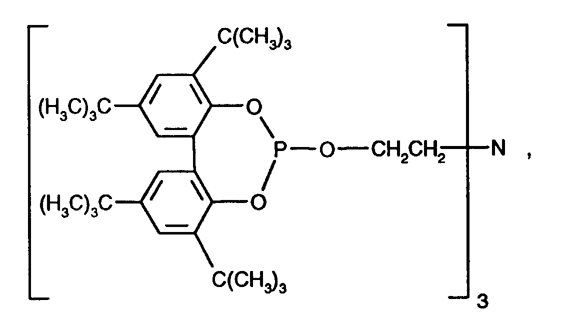
the phosphite of the formula 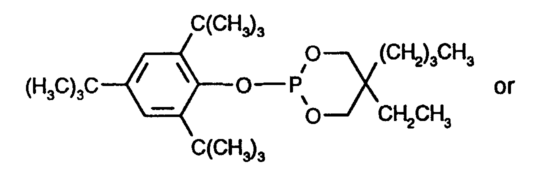
the phosphite of the formula

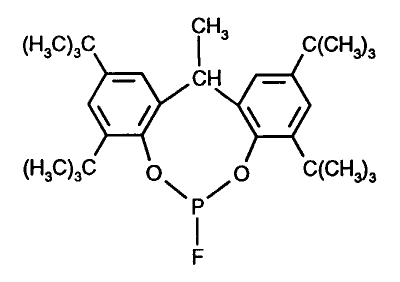

7. A polyolefin according to claim 1, containing additionally
**(E1)** a pigment or
**(E2)** an UV absorber or
**(E3)** a pigment and an UV absorber.

8. A polyolefin according to claim 7 wherein the pigment is titanium dioxide, zinc oxide, carbon black, cadmium sulfide, cadmium selenide, chromium oxide, iron oxide, lead oxide, an azo pigment, an anthraquinone, a phthalocyanine, a tetrachloroisoindolinone, a quinacridone, an isoindoline, a perylene or a pyrrolopyrrole.

9. A polyolefin according to claim 7 wherein the UV absorber is
a 2-(2'-hydroxyphenyl)benzotriazole, a 2-hydroxybenzophenone, an ester of substituted or unsubstituted benzoic acid, an acrylate, an oxamide, a
2-(2-hydroxyphenyl)-1,3,5-triazine, a monobenzoate of resorcinol or a formamidine.

10. A polyolefin according to claim 1 wherein the polyolefin is polypropylene.

11. A method for stabilizing a polyolefin against degradation induced by light, heat or oxidation, with the proviso that the polyolefin is different from high-density polyethylene, which method comprises incorporating into the polyolefin
**(A)** a sterically hindered amine compound,
**(B)** CaO and/or Ca(OH)₂ and
**(C)** a phenolic antioxidant.
